# EUROPEAN PATENT SPECIFICATION

(11) **EP 3 534 054 B1**
(45) Date of publication and mention of the grant of the patent: **03.11.2021**
(21) Application number: 17869281.0
(22) Date of filing: 22.08.2017
(51) Int. Cl.: F16L 59/065

(54) **VACUUM THERMAL INSULATING MATERIAL, METHOD FOR PRODUCING VACUUM THERMAL INSULATING MATERIAL, AND APPARATUS FOR PRODUCING VACUUM THERMAL INSULATING MATERIAL**
VAKUUMWÄRMEISOLIERMATERIAL, VERFAHREN ZUR HERSTELLUNG EINES VAKUUMWÄRMEISOLIERMATERIALS UND VORRICHTUNG ZUR HERSTELLUNG EINES VAKUUMWÄRMEISOLIERMATERIALS
MATÉRIAU D'ISOLATION THERMIQUE SOUS VIDE, PROCÉDÉ DE PRODUCTION DE MATÉRIAU D'ISOLATION THERMIQUE SOUS VIDE ET APPAREIL DE PRODUCTION DE MATÉRIAU D'ISOLATION THERMIQUE SOUS VIDE

(30) Priority: 10.11.2016 JP 2016219471
(43) Date of publication of application: 04.09.2019
(73) Proprietor: Mitsubishi Electric Corporation, Chiyoda-ku Tokyo 100-8310 (JP)
(72) Inventor: SHINOKI, Toshio, Tokyo 100-8310 (JP); NAKATSU, Satoshi, Tokyo 100-8310 (JP); MARUYAMA, Hitoshi, Tokyo 100-8310 (JP); YAJI, Yoshikazu, Tokyo 100-8310 (JP); SUZUKI, Shunkei, Tokyo 100-8310 (JP)
(74) Representative: Sajda, Wolf E.
(86) International application number: PCT/JP2017/029955
(87) International publication number: WO 2018/087983

(56) References cited:
- EP-A1- 2 873 902
- WO-A1-2013/121992
- WO-A1-2014/162771
- JP-A- H0 911 374
- JP-B1- 6 073 005
- KR-A- 20110 061 148
- US-A1- 2015 377 407

## Description

### Technical Field

The present invention relates to a vacuum heat insulating material including a core material and an outer covering material configured to accommodate the core material,
a method of manufacturing a vacuum heat insulating material, and a manufacturing apparatus for a vacuum heat insulating material.

### Background Art

There has hitherto been known a vacuum heat insulating material in which a core material including a plurality of laminated inorganic fiber sheets is sealed with an outer covering material under vacuum. Each of the inorganic fiber sheets is formed of curved strands and linear strands engaged with each other (see, for example, Patent Literature 1).

Further, there has also hitherto been known the following method of manufacturing a vacuum heat insulating material. Specifically, in the method having hitherto been known, a plurality of glass chopped strands are obtained by cutting strands which are manufactured by drawing molten glass from a large number of nozzles, and a core material is obtained by laminating a plurality of pieces of non-woven fabric formed of the glass chopped strands (see, for example, Patent Literature 2).

PTL 3 is considered relevant and relates to a vacuum heat insulator including a core member that is a stack of fibrous sheets and a cover member enclosing the core member. Each of the fibrous sheets includes curved chopped fibers and curved fibers.

PTL 4 is also considered relevant and relates to a continuous manufacturing process for a core of a vacuum heat insulator is provided to improve the bending strength of a core by employing organic fibers instead of inorganic fibers.

PTL 5 is considered relevant and relates to a vacuum insulation panel having excellent thermal insulation and cold retention performance using conventional glass fibers. The vacuum insulation panel employs annealed binderless glass fibers as a core material, thus ensuring superior thermal insulation performance and preventing out-gassing in a vacuum due to the absence of organic residues in the fibers, and thereby a vacuum level of the vacuum insulation panel can be maintained for a long period of time.

### Citation List

### Patent Literature

[PTL 1] WO 2013/121992 A1
[PTL 2] JP 2009-162267 A
[PTL 3] US2015/377407 A1
[PTL 4] KR 2011 0061148 A
[PTL 5] EP 2 873 902 A1

### Summary of the Invention

### Technical Problem

However, in the related-art vacuum heat insulating material disclosed in Patent Literature 1, the fiber sheet in which the curved strands and the linear strands are bundled by being engaged with each other is used as the core material, and hence the curved strands cause the core material to be bulky.

With this, heat is liable to move in a thickness direction of the vacuum heat insulating material through the curved strands, and there is a risk in that the heat insulating performance of the vacuum heat insulating material may be deteriorated.

In the related-art vacuum heat insulating material disclosed in Patent Literature 2, it is required to bundle the plurality of glass chopped strands with a binder when non-woven fabric is manufactured. With this, the contact heat resistance between the plurality of glass chopped strands is decreased due to the binder, and there is a risk in that the heat insulating performance of the vacuum heat insulating material may be deteriorated.

The present invention has been made so as to solve the above-mentioned problems, and an object of the present invention is to obtain a vacuum heat insulating material capable of improving heat insulating performance, a method of manufacturing a vacuum heat insulating material, and a manufacturing apparatus for a vacuum heat insulating material.

### Solution to the Problem

According to the invention, the problem is solved by the subject-matter outlined in the independent claims. Advantageous further developments of the invention are set forth in the dependent claims.

### Advantageous Effects of the Invention

In the vacuum heat insulating material, the method of manufacturing a vacuum heat insulating material, and the manufacturing apparatus for a vacuum heat insulating material according to the present invention, the second fibers can be easily pressed with the first fibers while the deformation of the plurality of first fibers is suppressed. Thus, the direction of the plurality of first fibers can be brought close to a direction orthogonal to a thickness direction of the vacuum heat insulating material, and the direction of the plurality of second fibers can also be brought close to the direction orthogonal to the thickness direction of the vacuum heat insulating material.

Thus, the movement of heat through the first fibers and the second fibers can be suppressed in the thickness direction of the vacuum heat insulating material. Further, when crimpability is imparted to the second fibers, the plurality of second fibers are likely to be fitted in the plurality of first fibers having linearity, with the result that the shape of the core material can be ensured without a binder. With this, the heat insulating performance of the vacuum heat insulating material can be improved.

### Brief Description of the Drawings

- FIG. 1: is a vertical sectional view for illustrating a vacuum heat insulating material according to a first embodiment of the present invention.
- FIG. 2: is a partially enlarged view for illustrating a fiber body of FIG. 1.
- FIG. 3: is a configuration view for illustrating a manufacturing apparatus for a vacuum heat insulating material, which is configured to manufacture the fiber body of FIG. 1.
- FIG. 4: is a configuration view for illustrating a manufacturing apparatus for a vacuum heat insulating material according to a second embodiment of the present invention.
- FIG. 5: is a configuration view for illustrating a manufacturing apparatus for a vacuum heat insulating material according to a third embodiment of the present invention.
- FIG. 6: is a vertical sectional view for illustrating a fiber body manufactured by the manufacturing apparatus for a vacuum heat insulating material of FIG. 5.
- FIG. 7: is a configuration view for illustrating a manufacturing apparatus for a vacuum heat insulating material according to a fourth embodiment of the present invention.
- FIG. 8: is a vertical sectional view for illustrating a fiber body manufactured by the manufacturing apparatus for a vacuum heat insulating material of FIG. 7.
- FIG. 9: is a configuration view for illustrating a manufacturing apparatus for a vacuum heat insulating material according to a fifth embodiment of the present invention.
- FIG. 10: is a vertical sectional view for illustrating a fiber body manufactured by the manufacturing apparatus for a vacuum heat insulating material of FIG. 9.
- FIG. 11: is a configuration view for illustrating a manufacturing apparatus for a vacuum heat insulating material according to a sixth embodiment of the present invention.
- FIG. 12: is a vertical sectional view for illustrating a fiber body manufactured by the manufacturing apparatus for a vacuum heat insulating material of FIG. 11.

### Description of Embodiments

### First Embodiment

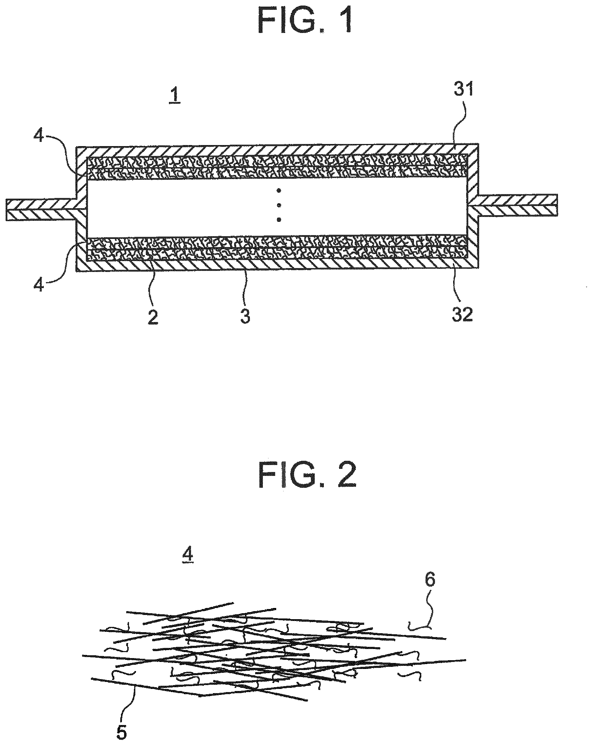

FIG. 1 is a vertical sectional view for illustrating a vacuum heat insulating material according to a first embodiment of the present invention. In FIG. 1, a vacuum heat insulating material 1 includes a core material 2 and an outer covering material 3 configured to accommodate the core material 2. Movement of heat in a thickness direction of the vacuum heat insulating material 1 is mainly largely influenced by the individual heat conduction from the core material 2.

The core material 2 is sealed in the outer covering material 3 under vacuum. Further, the core material 2 includes a plurality of web-shaped fiber bodies 4 laminated in the thickness direction of the vacuum heat insulating material 1.

The outer covering material 3 includes a first outer covering material sheet 31 and a second outer covering material sheet 32. The first outer covering material sheet 31 and the second outer covering material sheet 32 are configured to cover the core material 2 in a state of sandwiching the core material 2 from both sides in a lamination direction of the plurality of fiber bodies 4. The outer covering material 3 has a configuration in which respective outer peripheral portions of the first outer covering material sheet 31 and the second outer covering material sheet 32 are bonded to each other.

In this example, each of the first outer covering material sheet 31 and the second outer covering material sheet 32 has a rectangular shape, and four sides of each of the outer peripheral portions of the first outer covering material sheet 31 and the second outer covering material sheet 32 are bonded to each other. The inside of the outer covering material 3 is decompressed to a vacuum.

Further, each of the first outer covering material sheet 31 and the second outer covering material sheet 32 is formed of a laminate film having a multilayer structure.

As the laminate film, for example, an aluminum laminate sheet, in which oriented nylon (ONY), aluminum vapor-deposited polyethylene terephthalate (AL vapor-deposited PET), an aluminum foil (AL foil), and cast polypropylene (CPP) are laminated, may be used. Further, the laminate film includes, for example, an ONY layer having a film thickness of 25 µm, an AL vapor-deposited PET layer having a film thickness of 12 µm, an AL foil layer having a film thickness of 7 µm, and a CPP layer having a film thickness of 30 µm. The configuration of the laminate film is not limited thereto, and, for example, ONY, aluminum vapor-deposited polyethylene terephthalate, an aluminum vapor-deposited ethylene vinyl alcohol copolymer, CPP, and the like may be used in the laminate film. When an AL foil is not used in the configuration of the laminate film, the movement of heat through the outer covering material 3, that is, a so-called heat bridge can be suppressed.

FIG. 2 is a partially enlarged view for illustrating the fiber body 4 of FIG. 1. The fiber body 4 includes a plurality of first fibers 5 and a plurality of second fibers 6. The first fibers 5 and the second fibers 6 are each formed of a glass material.

Each of the first fibers 5 is a fiber having linearity. Each of the second fibers 6 is a fiber having crimpability. Specifically, each of the second fibers 6 is a curled and cotton-shaped fiber. With this, the second fiber 6 is more easily bent as compared to the first fiber 5. In this example, each of the first fibers 5 is a chopped glass fiber, and each of the second fibers 6 is glass wool.

The plurality of first fibers 5 have an average fiber diameter larger than an average fiber diameter of the plurality of second fibers 6. For example, it is desired that the plurality of first fibers 5 have an average fiber diameter of ϕ5 µm or more, and the plurality of second fibers 6 have an average fiber diameter of less than ϕ5 µm. Further, the plurality of first fibers 5 have an average fiber length larger than an average fiber length of the plurality of second fibers 6.

Further, the plurality of first fibers 5 have a Young's modulus higher than a Young's modulus of the plurality of second fibers 6. When the Young's modulus is represented by E, stress is represented by σ, and strain is represented by ε, a relationship of σ = E·ε holds. For example, when it is assumed that the fiber diameter is the same, deformation with respect to an external force is smaller as the Young's modulus is higher.

In this case, when the compression stress caused by the atmospheric pressure from outside acts on the vacuum heat insulating material, the deformation of the second fibers 6 is larger than the deformation of the first fibers 5. Therefore, the straight first fibers 5 press the second fibers 6 directed in the fiber lamination direction while maintaining the shapes, and the second fibers 6 are easily directed in a direction orthogonal to the fiber lamination direction.

In the fiber body 4, the plurality of first fibers 5 and the plurality of second fibers 6 are mixed with each other. Further, in the fiber body 4, the plurality of second fibers 6 are tangled with the plurality of first fibers 5. Further, in the fiber body 4, each of the first fibers 5 is arranged at an angle close to an angle orthogonal to the thickness direction of the vacuum heat insulating material 1.

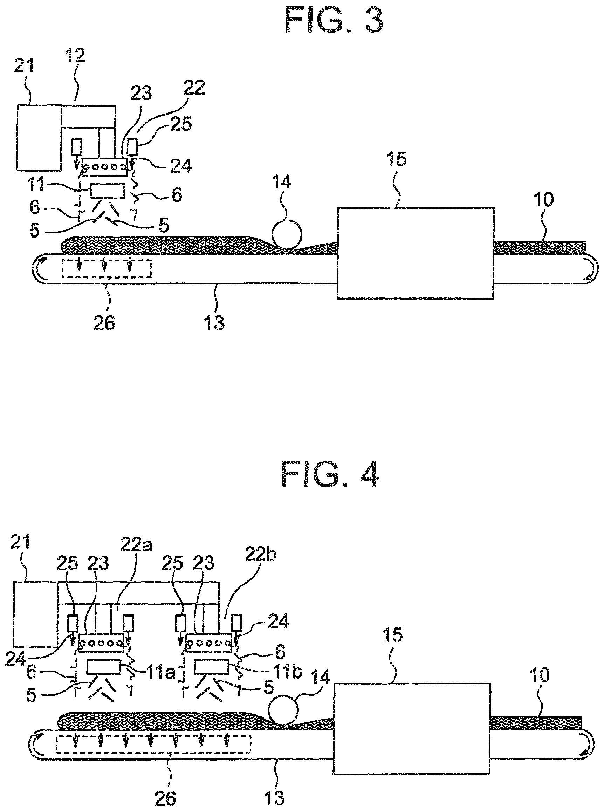

Next, a manufacturing apparatus for the vacuum heat insulating material 1 is described. FIG. 3 is a configuration view for illustrating a manufacturing apparatus for a vacuum heat insulating material, which is configured to manufacture the fiber body 4 of FIG. 1. The manufacturing apparatus for a vacuum heat insulating material includes a first-fiber manufacturing device (not shown), a dispersion device 11, a second-fiber manufacturing device 12, a conveyor 13, a roller 14, and a dryer 15. The first-fiber manufacturing device is configured to manufacture the plurality of first fibers 5.

The dispersion device 11 is configured to disperse the plurality of first fibers 5. The second-fiber manufacturing device 12 is configured to manufacture the plurality of second fibers 6. The conveyor 13 is configured to convey the plurality of first fibers 5 dispersed in the dispersion device 11 and the plurality of second fibers 16 manufactured in the first-fiber manufacturing device. The roller 14 is a compression device configured to compress the plurality of first fibers 5 and the plurality of second fibers 6 on the conveyor 13 to obtain a continuous fiber body 10. The dryer 15 is configured to dry the continuous fiber body 10 compressed with the roller 14.

The first-fiber manufacturing device includes a first melting furnace, a spinning nozzle, and a cutting machine. The first melting furnace is configured to melt a first glass material. The spinning nozzle is configured to draw the melted first glass material by a drawing method to manufacture a continuous fiber. The cutting machine is configured to cut the continuous fiber to manufacture a plurality of chopped fibers so that the plurality of chopped fibers are used as the plurality of first fibers 5.

In this example, the diameter of the continuous fiber is set to a desired diameter in advance in a range of from about ϕ6 µm to about ϕ14 µm. Further, in this example, the continuous fiber is cut to a length exceeding 8 mm, for example, a length of 50 mm with the cutting machine to manufacture the plurality of first fibers 5. In FIG. 3, the first melting furnace, the spinning nozzle, and the cutting machine are not illustrated.

The dispersion device 11 is arranged above the conveyor 13. Further, the dispersion device 11 is configured to supply the plurality of first fibers 5 onto the conveyor 13 while dispersing and dropping the plurality of first fibers 5 manufactured in the first-fiber manufacturing device.

The second-fiber manufacturing device 12 includes a second melting furnace 21 and a fiber-forming mechanism 22. The second melting furnace 21 is configured to melt a second glass material. The fiber-forming mechanism 22 is configured to manufacture the second fibers 6 from the second glass material melted in the second melting furnace 21 by a centrifugation method.

The fiber-forming mechanism 22 is arranged above the conveyor 13. Further, the fiber-forming mechanism 22 is arranged at the same position as that of the dispersion device 11 in a conveyance direction of the conveyor 13. In this example, the fiber-forming mechanism 22 is arranged above the dispersion device 11. Further, the fiber-forming mechanism 22 includes a centrifugal spinner 23 and an air flow generation device 25. The centrifugal spinner 23 is configured to discharge the second glass material melted in the second melting furnace 21 with a centrifugal force.

The air flow generation device 25 is configured to generate an air flow 24 for stretching, in an axial direction, the fiber-shaped second glass material discharged from the centrifugal spinner 23. The first melting furnace and the second melting furnace 21 may be a common melting furnace or may be different from each other. Further, the first glass material and the second glass material are different from each other.

A plurality of discharge ports are formed in an outer peripheral portion of the centrifugal spinner 23. The centrifugal spinner 23 is configured to rotate to impart a centrifugal force to the second glass material melted in the second melting furnace 21 and discharge the melted second glass material from the plurality of discharge ports.

The air flow generation device 25 is arranged on the periphery of the centrifugal spinner 23. Further, the air flow generation device 25 is configured to jet an air flow 24 downwardly to the conveyor 13. The second glass material discharged from the centrifugal spinner 23 becomes the plurality of second fibers 6 having crimpability while being stretched with the air flow 24.

The plurality of second fibers 6 are supplied onto the conveyor 13 while being dispersed and dropped from the centrifugal spinner 23. With this, the plurality of first fibers 5 and the plurality of second fibers 6 are dropped while being mixed above the conveyor 13, and are supplied onto the conveyor 13 in a state of being mixed and tangled with each other.

The conveyor 13 includes a suction portion 26 configured to suck the air flow 24. The air flow 24 output from the air flow generation device 25 is sucked into the suction portion 26 through the conveyor 13. With this, the plurality of first fibers 5 and the plurality of second fibers 6 are held on the conveyor 13, and scattering of the first fibers 5 and the second fibers 6 from the conveyor 13 is suppressed.

The roller 14 is arranged on a downstream side in the conveyance direction of the conveyor 13 with respect to the dispersion device 11 and the centrifugal spinner 23. Further, the roller 14 is arranged above the conveyor 13. The plurality of first fibers 5 and the plurality of second fibers 6 conveyed on the conveyor 13 are sandwiched between the conveyor 13 and the roller 14 and compressed to form the continuous fiber body 10.

The dryer 15 is arranged on the downstream side in the conveyance direction of the conveyor 13 with respect to the roller 14. The conveyor 13 penetrates through the dryer 15. With this, the continuous fiber body 10 is dried in the dryer 15 while being conveyed by the conveyor 13.

Next, a method of manufacturing the core material 2 of the vacuum heat insulating material 1 is described. The plurality of first fibers 5 are manufactured in advance by the first-fiber manufacturing device (first-fiber manufacturing step).

When the plurality of first fibers 5 are manufactured in the first-fiber manufacturing step, the first glass material is first melted in the first melting furnace (first melting step).

After that, the melted first glass material is drawn from the spinning nozzle by the drawing method to manufacture a continuous fiber (continuous fiber manufacturing step). In this case, a plurality of continuous fibers are temporarily wound up onto a drum in a state of being bundled.

After that, a bundle of the plurality of continuous fibers is cut to a length of, for example, 50 mm with the cutting machine while being unwound from the drum to manufacture chopped fibers. With this, the plurality of chopped fibers are obtained as the plurality of first fibers 5. In the continuous fiber manufacturing step, the bundle of the plurality of continuous fibers may be directly cut without being wound up onto the drum to manufacture the plurality of chopped fibers (cutting step).

When the fiber body 4 is manufactured, the plurality of second fibers 6 are first manufactured by the second-fiber manufacturing device 12 (second-fiber manufacturing step).

When the plurality of second fibers 6 are manufactured in the second-fiber manufacturing step, the second glass material is first melted in the second melting furnace 21 (second melting step).

After that, the melted second glass material is supplied to the fiber-forming mechanism 22, and then, a plurality of pieces of glass wool are manufactured from the second glass material by the centrifugation method in the fiber-forming mechanism 22. The plurality of pieces of glass wool are used as the plurality of second fibers 6. Specifically, the second glass material is discharged with a centrifugal force from the plurality of discharge ports formed in the outer peripheral portion of the centrifugal spinner 23 while the centrifugal spinner 23 is rotated.

The discharged second glass material is cooled while being stretched with the air flow 24 generated in the air flow generation device 25 to form the plurality of pieces of glass wool. In this case, the fiber diameter of the second glass material is smaller by more than an order of magnitude as compared to that at the time of being discharged from the centrifugal spinner 23. With this, the plurality of pieces of glass wool are obtained as the plurality of second fibers 6 (centrifugation step).

The plurality of second fibers 6 are dropped to be supplied onto the conveyor 13 while being dispersed in air from the centrifugal spinner 23. Meanwhile, the plurality of first fibers 5 manufactured in advance are supplied to the dispersion device 11, and are dropped while being dispersed in air from the dispersion device 11 to be supplied onto the conveyor 13. The plurality of first fibers 5 and the plurality of second fibers 6 are dropped at the same position in the conveyance direction of the conveyor 13.

Therefore, the plurality of first fibers 5 and the plurality of second fibers 6 are dropped onto the conveyor 13 in a mixed state of being tangled with each other in a space above the conveyor 13, and are mixed with each other on the conveyor 13. Specifically, the plurality of first fibers 5 and the plurality of second fibers 6 are mixed with each other while being supplied onto the conveyor 13. In this case, air is sucked by the suction portion 26, and scattering of the plurality of first fibers 5 and the plurality of second fibers 6 from the conveyor 13 is suppressed (fiber supply step).

After that, the plurality of first fibers 5 and the plurality of second fibers 6 supplied onto the conveyor 13 are conveyed by the conveyor 13, and the plurality of first fibers 5 and the plurality of second fibers 6 are compressed with the roller 14 on the conveyor 13. With this, the adhesiveness between the plurality of first fibers 5 and the plurality of second fibers 6 is enhanced, and the continuous fiber body 10 is obtained (compression step).

Thereafter, the continuous fiber body 10 is caused to pass through the dryer 15 while being conveyed on the conveyor 13, to thereby remove, for example, moisture of the continuous fiber body 10 (drying step).

After that, the continuous fiber body 10 is cut to a predetermined dimension to manufacture the fiber body 4. In this case, the continuous fiber body 10 dried by the dryer 15 may be temporarily wound into a roll shape, and then, the roll-shaped continuous fiber body 10 may be unwound to be cut. Alternatively, the continuous fiber body 10 may be directly cut at the most downstream position of the conveyor 13 (cutting step).

Thereafter, the core material 2 is manufactured from the plurality of fiber bodies 4. Specifically, the plurality of fiber bodies 4 are laminated, and then, the laminated plurality of fiber bodies 4 are cut in conformity with the size of the core material 2 to manufacture the core material 2. The size of each of the fiber bodies 4 is set in consideration of the strain of the fiber body 4 caused by a pressure difference between the atmospheric pressure and the vacuum, which is dependent on vacuum sealing at the time of manufacturing of the vacuum heat insulating material 1.

The core material 2 may be manufactured by cutting the plurality of fiber bodies 4 in advance in conformity with the size of the core material 2 and laminating the plurality of fiber bodies 4 in conformity with the size of the core material 2. Further, the fiber body 4 that is a single body may be used as the core material 2 instead of laminating the plurality of fiber bodies 4 (core material manufacturing step).

Next, a method of manufacturing the vacuum heat insulating material 1 is described. When the outer covering material 3 is manufactured, a continuous outer covering material sheet wound into a roll shape is first cut to manufacture the first outer covering material sheet 31 having a rectangular shape and the second outer covering material sheet 32 having a rectangular shape, and then, the first outer covering material sheet 31 and the second outer covering material sheet 32 are stacked on one another,

After that, the first outer covering material sheet 31 and the second outer covering material sheet 32 are bonded to each other through heat seal joining at positions of two sides along a widthwise direction and at a position of one side along a lengthwise direction of four sides of the stacked first outer covering material sheet 31 and the second outer covering material sheet 32.

Thereafter, the first outer covering material sheet 31 and the second outer covering material sheet 32 are cut together so that the dimension in the widthwise direction has a set value, to thereby manufacture the outer covering material 3 having a bag shape with an opening. In the bag-shaped outer covering material 3, of four sides of the rectangle of the stacked first outer covering material sheet 31 and the second outer covering material sheet 32, two sides along the widthwise direction and one side along the lengthwise direction are joined to each other, and the remaining one side along the lengthwise direction is not joined.

After the bag-shaped outer covering material 3 is manufactured, the core material 2 is inserted into the bag-shaped outer covering material 3 through the opening of the outer covering material 3. After that, the bag-shaped outer covering material 3 accommodating the core material 2 is placed in a vacuum chamber, and the inside of the vacuum chamber is decompressed.

In this case, the inside of the vacuum chamber is decompressed so as to have a vacuum degree within a range of, for example, from 0.1 Pa to 3 Pa. With this, the bag-shaped outer covering material 3 accommodating the core material 2 is subjected to decompression processing. In this case, the thickness of the core material 2 is reduced to about 1/5 to about 1/10 as compared to the thickness given before the decompression processing.

After that, in a state in which the bag-shaped outer covering material 3 accommodating the core material 2 is subjected to the decompression processing, the remaining one side, which is not joined, in the bag-shaped outer covering material 3 is subjected to heat seal joining. With this, the outer covering material 3, in which the respective outer peripheral portions of the first outer covering material sheet 31 and the second outer covering material sheet 32 are bonded to each other, is completed. Further, with this, the vacuum heat insulating material 1, in which the core material 2 is sealed in the outer covering material 3 in vacuum, is completed. After that, the inside of the vacuum chamber is returned to the atmospheric pressure, and the vacuum heat insulating material 1 is taken out from the vacuum chamber.

When, for example, moisture remains in the core material 2 in a state in which the core material 2 is sealed in the outer covering material 3 in vacuum, gas is generated from the core material 2 in the outer covering material 3, and there is a risk in that the vacuum degree in the outer covering material 3 may decrease. Thus, it is desired that the core material 2 be dried until immediately before the decompression processing is performed in the vacuum chamber.

Further, when the bag-shaped outer covering material 3 accommodating the core material 2 is placed in the vacuum chamber, an adsorbent for adsorbing moisture and gas may be inserted into the outer covering material 3 as necessary. As the adsorbent, for example, a single substance or a complex of calcium oxide, zeolite, a barium lithium alloy, and the like is used. With this, the adsorbent can be caused to adsorb moisture and air in the outer covering material 3, and the vacuum state in the outer covering material 3 of the vacuum heat insulating material 1 can be improved.

In the vacuum heat insulating material 1 in this example, the first fibers 5 and the second fibers 6 are present in about 10 % of the core material 2 in a volume ratio, and a vacuum space is ensured in about 90 % of the core material 2 in a volume ratio. Thus, the vacuum space is ensured in about 90 % of the core material 2, and hence high heat insulating performance of the vacuum heat insulating material 1 is ensured.

In the above-mentioned vacuum heat insulating material 1, when the core material 2 accommodated in the outer covering material 3 includes the plurality of first fibers 5 having linearity and the plurality of cotton-shaped second fibers 6 having crimpability, the second fibers 6 having crimpability are more easily deformed with respect to an external force, as compared to the first fibers 5.

With this, in a compressed state in the outer covering material 3, the second fibers 6 can be easily pressed with the first fibers 5 while the deformation of the plurality of first fibers 5 is suppressed, with the result that the second fibers 6 directed in the thickness direction of the vacuum heat insulating material 1 can be easily flattened. Thus, the direction of the plurality of first fibers 6 can be brought close to a direction orthogonal to the thickness direction of the vacuum heat insulating material 1, and the direction of the plurality of second fibers 6 can also be brought close to the direction orthogonal to the thickness direction of the vacuum heat insulating material 1.

Thus, the movement of heat through the first fibers 5 and the second fibers 6 can be suppressed in the thickness direction of the vacuum heat insulating material 1. Further, when crimpability is imparted to the second fibers 6, the plurality of second fibers 6 are likely to be fitted in the plurality of first fibers 5 having linearity, with the result that the shape of the core material 2 can be ensured without a binder. With this, the heat insulating performance of the vacuum heat insulating material 1 can be improved.

Further, in the above-mentioned manufacturing apparatus for the vacuum heat insulating material 1, the plurality of first fibers 5 having linearity and the plurality of second fibers 6 having crimpability are conveyed by the conveyor 13, and the plurality of first fibers 5 and the plurality of second fibers 6 are compressed with the roller 14 on the conveyor 13, to thereby obtain the continuous fiber body 10. Therefore, the continuous fiber body 10 serving as a raw material for the core material 2 can be easily manufactured, and the vacuum heat insulating material 1 capable of improving the heat insulating performance can be easily manufactured. Further, the continuous fiber body 10 can be manufactured without use of a paper-making method or the like. Therefore, heating energy for removing moisture from the continuous fiber body 10 can be significantly decreased, and cost can be reduced.

Further, the manufacturing apparatus for the vacuum heat insulating material 1 includes the fiber-forming mechanism 22 configured to manufacture the plurality of second fibers 6 from the melted second glass material by the centrifugation method, and hence the plurality of second fibers 6 having crimpability can be easily manufactured.

Further, in the above-mentioned method of manufacturing the vacuum heat insulating material 1, the plurality of first fibers 5 having linearity and the plurality of second fibers 6 having crimpability are conveyed by the conveyor 13, and the plurality of first fibers 5 and the plurality of second fibers 6 are compressed on the conveyor 13.

Therefore, the continuous fiber body 10 serving as a raw material for the core material 2 can be easily manufactured, and the vacuum heat insulating material 1 capable of improving the heat insulating performance can be easily manufactured. Further, the continuous fiber body 10 can be manufactured without use of a paper-making method or the like. Therefore, heating energy for removing moisture from the continuous fiber body 10 can be significantly decreased, and cost can be reduced.

Further, in the method of manufacturing the vacuum heat insulating material 1, after the continuous fiber is manufactured from the melted first glass material by the drawing method, the manufactured continuous fiber is cut to manufacture the chopped fibers so that the chopped fibers are used as the plurality of first fibers 5. Therefore, the plurality of first fibers 5 can be easily manufactured.

Moreover, in the method of manufacturing the vacuum heat insulating material 1, the glass wool is manufactured from the melted second glass material by the centrifugation method so that the glass wool is used as the plurality of second fibers 6. Therefore, the plurality of second fibers 6 can be easily manufactured.

Further, in the method of manufacturing the vacuum heat insulating material 1, the plurality of first fibers 5 and the plurality of second fibers 6 are mixed with each other while the plurality of first fibers 5 and the plurality of second fibers 6 are supplied onto the conveyor 13. Therefore, the plurality of second fibers 6 can be easily tangled with the plurality of first fibers 5. With this, the binding force between the plurality of first fibers 5 and the plurality of second fibers 6 can be easily increased, and the shape of the core material 2 can be more reliably ensured without use of a binder.

Further, in the method of manufacturing the vacuum heat insulating material 1, the plurality of first fibers 5 and the plurality of second fibers 6 are mixed with each other in a space above the conveyor 13, and hence the plurality of second fibers 6 can be more reliably tangled with the plurality of first fibers 5. With this, the binding force between the plurality of first fibers 5 and the plurality of second fibers 6 can be more reliably increased, and the shape of the core material 2 can be more reliably ensured without use of a binder.

Moreover, the plurality of first fibers 5 have an average fiber diameter larger than an average fiber diameter of the plurality of second fibers 6. Therefore, the second fibers 6 can be more easily deformed as compared to the first fibers 5, and the second fibers 6 can be more easily pressed with the first fibers 5. With this, the direction of the plurality of second fibers 6, as well as the direction of the plurality of first fibers 6 can be further brought close to the direction orthogonal to the thickness direction of the vacuum heat insulating material 1.

Further, the plurality of second fibers 6 have a smaller average fiber diameter, and hence the heat transfer amount of the second fibers 6 themselves can also be reduced. Because of the foregoing, the movement of heat through the first fibers 5 and the second fibers 6 can be further suppressed in the thickness direction of the vacuum heat insulating material 1, and the heat insulating performance of the vacuum heat insulating material 1 can be further improved.

Also, the plurality of first fibers 5 have an average fiber length larger than an average fiber length of the plurality of second fibers 6, and hence the second fibers 6 can be more easily pressed with the first fibers 5. Further, a heat transfer path through the plurality of second fibers 6 is formed into small segments. Thus, the movement of heat through the first fibers 5 and the second fibers 6 can be further suppressed in the thickness direction of the vacuum heat insulating material 1, and the heat insulating performance of the vacuum heat insulating material 1 can be further improved.

Furthermore, the plurality of second fibers 6 have a Young's modulus lower than a Young's modulus of the plurality of first fibers 5, and hence the second fibers 6 are more easily deformed as compared to the first fibers 5. With this, through pressing of the plurality of second fibers 6 directed in the thickness direction of the vacuum heat insulating material 1 with the first fibers 5, the direction of the second fibers 6 can be more easily brought close to the direction orthogonal to the thickness direction of the vacuum heat insulating material 1 while the deformation of the plurality of first fibers 5 is suppressed. Thus, the heat insulating performance of the vacuum heat insulating material 1 can be more easily improved.

The magnitude of a Young's modulus E can be adjusted by changing the composition of the glass material. For example, in the case of a fiber formed of a glass material containing Al₂O₃, as the content of Al₂O₃ is increased, the fiber has a higher Young's modulus E. Therefore, for example, when the content of Al₂O₃ contained in the first glass material forming the first fibers 5 is set to be higher than the content of Al₂O₃ contained in the second glass material forming the second fibers 6, the Young's modulus of the plurality of first fibers 5 can be set to be higher than the Young's modulus of the plurality of second fibers 6.

Further, when the Young's modulus is represented by E, and the average fiber diameter is represented by d, it is desired that the first fibers 5 have a value of (π·d²·E)/4 larger than a value of (π·d²·E)/4 of the second fibers 6 from the viewpoint of fiber stiffness.

Next, in order to verify the effects of the vacuum heat insulating material according to the first embodiment, the vacuum heat insulating material according to the first embodiment and a vacuum heat insulating material according to Comparative Example to be compared to the first embodiment were respectively manufactured, and the heat conductivity of the vacuum heat insulating material according to the first embodiment and the heat conductivity of the vacuum heat insulating material according to Comparative Example were measured.

In the vacuum heat insulating material according to the first embodiment, a continuous fiber having an average diameter of ϕ6 µm was manufactured by drawing the first glass material having a composition of E glass from a spinning nozzle by the drawing method, and the manufactured continuous fiber was cut to an average fiber length of about 10 mm, to thereby manufacture the plurality of first fibers 5.

Further, in the vacuum heat insulating material according to the first embodiment, glass wool having an average diameter of about ϕ4 µm was manufactured as the plurality of second fibers 6 from the second glass material having a composition of C glass by the centrifugation method. Further, in the vacuum heat insulating material according to the first embodiment, the plurality of first fibers 5 were mixed with the second fibers 6 in a process of supplying the manufactured second fibers 6 onto the conveyor 13, to thereby manufacture a plurality of mixed layers in which the plurality of first fibers 5 and the plurality of second fibers 6 were mixed with each other.

A laminate in which four mixed layers were laminated was used as the core material 2. Further, in the vacuum heat insulating material according to the first embodiment, the weight ratio between the first fibers 5 and the second fibers 6 in the core material 2 was set to about 7:3. Meanwhile, in Comparative Example, the vacuum heat insulating material in which a laminate including only the plurality of second fibers was used as the core material was manufactured under the same condition as that of the first embodiment.

As a result of measurement of the heat conductivity of the vacuum heat insulating material according to the first embodiment and the heat conductivity of the vacuum heat insulating material according to Comparative Example, the heat conductivity of the vacuum heat insulating material according to the first embodiment was 0.0013 W/(m·K), and the heat conductivity of the vacuum heat insulating material according to Comparative Example was 0.0017 W/(m·K).

According to this verification, the heat conductivity being an indicator for indicating the heat insulating performance was reduced by about 24 % in the vacuum heat insulating material according to the first embodiment as compared to the heat conductivity of the vacuum heat insulating material according to Comparative Example.

### Second Embodiment

FIG. 4 is a configuration view for illustrating a manufacturing apparatus for a vacuum heat insulating material according to a second embodiment of the present invention. In the second embodiment, a plurality of fiber-forming mechanisms 22a and 22b are arranged apart from each other in the conveyance direction of the conveyor 13, and a plurality of dispersion devices 11a and 11b are arranged apart from each other in the conveyance direction of the conveyor 13.

The number of the fiber-forming mechanisms 22a and 22b is the same as that of the dispersion devices 11a and 11b. The plurality of dispersion devices 11a and 11b are respectively arranged at the same positions as those of the plurality of fiber-forming mechanisms 22a and 22b in the conveyance direction of the conveyor 13.

In this example, the first fiber-forming mechanism 22a and the second fiber-forming mechanism 22b are arranged apart from each other in the conveyance direction of the conveyor 13. Further, in this example, the first dispersion device 11a is arranged at the same position as that of the first fiber-forming mechanism 22a in the conveyance direction of the conveyor 13, and the second dispersion device 11b is arranged at the same position as that of the second fiber-forming mechanism 22b in the conveyance direction of the conveyor 13.

The second fiber-forming mechanism 22b is arranged on a downstream side in the conveyance direction of the conveyor 13 with respect to the first fiber-forming mechanism 22a, that is, on the roller 14 side. Each configuration of the first fiber-forming mechanism 22a and the second fiber-forming mechanism 22b is the same as that of the fiber-forming mechanism 22 in the first embodiment. The melted second glass material is supplied to each of the first fiber-forming mechanism 22a and the second fiber-forming mechanism 22b from the common second melting furnace 21.

Further, the first dispersion device 11a is arranged below the first fiber-forming mechanism 22a, and the second dispersion device 11b is arranged below the second fiber-forming mechanism 22b. Each configuration of the first dispersion device 11a and the second dispersion device 11b is the same as that of the dispersion device 11 in the first embodiment. The other configurations of the manufacturing apparatus for a vacuum heat insulating material are the same as those of the first embodiment.

Next, a method of manufacturing the core material 2 of the vacuum heat insulating material 1 is described. First, the plurality of first fibers 5 are manufactured in advance in the same manner as in the first-fiber manufacturing step in the first embodiment. The plurality of first fibers 5 are supplied to each of the first dispersion device 11a and the second dispersion device 11b (first-fiber manufacturing step).

When the fiber body 4 is manufactured, the plurality of second fibers 6 are manufactured in each of the first fiber-forming mechanism 22a and the second fiber-forming mechanism 22b in the same manner as in the second-fiber manufacturing step in the first embodiment (second-fiber manufacturing step).

The plurality of second fibers 6 manufactured in each of the first fiber-forming mechanism 22a and the second fiber-forming mechanism 22b are supplied onto the conveyor 13 at positions respectively corresponding to the first fiber-forming mechanism 22a and the second fiber-forming mechanism 22b while being dispersed in air from the centrifugal spinner 23 of the first fiber-forming mechanism 22a. Meanwhile, the plurality of first fibers 5 manufactured in advance are dropped while being dispersed in air from each of the first dispersion device 11 a and the second dispersion device 11b and supplied onto the conveyor 13 at positions respectively corresponding to the first dispersion device 11a and the second dispersion device 11b.

With this, the plurality of first fibers 5 and the plurality of second fibers 6 are supplied to different positions on the conveyor 13 in a state of being tangled to be mixed with each other. Specifically, in the conveyance direction of the conveyor 13, the plurality of first fibers 5 and the plurality of second fibers 6 are supplied onto the conveyor 13 at the positions of the first fiber-forming mechanism 22a and the first dispersion device 11a, and then further supplied onto the conveyor 13 at the positions of the second fiber-forming mechanism 22b and the second dispersion device 11b.

With this, on the conveyor 13, the plurality of first fibers 5 and the plurality of second fibers 6 supplied from the second fiber-forming mechanism 22b and the second dispersion device 11b are stacked on the plurality of first fibers 5 and the plurality of second fibers 6 supplied from the first fiber-forming mechanism 22a and the first dispersion device 11a (fiber supply step). The manufacturing procedure after this is the same as that of the first embodiment.

In the fiber body 4 manufactured by the manufacturing method in the second embodiment, the mixed layers of the plurality of first fibers 5 and the plurality of second fibers 6 are formed in two stages.

In the above-mentioned method of manufacturing a vacuum heat insulating material, the plurality of first fibers 5 are supplied onto the conveyor 13 from each of the plurality of dispersion devices 11 a and 11b arranged at different positions in the conveyance direction of the conveyor 13, and the plurality of second fibers 6 are supplied onto the conveyor 13 from the plurality of fiber-forming mechanisms 22a and 22b respectively arranged at the same positions as those of the plurality of dispersion devices 11a and 11b in the conveyance direction of the conveyor 13.

Therefore, the number of the mixed layers of the plurality of first fibers 5 and the plurality of second fibers 6 in the fiber body 4 can be increased to a plurality of stages as compared to the fiber body 4 in the first embodiment. With this, the plurality of first fibers 5 and the plurality of second fibers 6 can be more finely mixed with each other, and the binding force of the plurality of first fibers 5 and the plurality of second fibers 6 can be further increased. Further, the number of the mixed layers of the plurality of first fibers 5 and the plurality of second fibers 6 is increased.

Therefore, the thickness per layer of the mixed layers in the fiber body 4 can be reduced, and the direction of the first fibers 5 and the direction of the second fibers 6 can be more reliably brought close to the direction orthogonal to the thickness direction of the vacuum heat insulating material 1. With this, the heat insulating performance of the vacuum heat insulating material 1 can be more reliably improved.

Further, in the second embodiment, when the supply amount of the first fibers 5 supplied from the first dispersion device 11a, the supply amount of the first fibers 5 supplied from the second dispersion device 11b, and the supply amount of the first fibers 5 supplied from the dispersion device 11 in the first embodiment are the same, and the supply amount of the second fibers 6 supplied from the first fiber-forming mechanism 22a, the supply amount of the second fibers 6 supplied from the second fiber-forming mechanism 22b, and the supply amount of the second fibers 6 supplied from the fiber-forming mechanism 22 in the first embodiment are the same, the fiber body 4 having a thickness that is twice the thickness of the fiber body 4 in the first embodiment can be manufactured. In this case, the number of lamination of the fiber body 4 forming the core material 2 can be halved without deteriorating the heat insulating performance of the core material 2, and the number of components and cost can be reduced.

In the above-mentioned example, the number of the fiber-forming mechanisms 22a and 22b is set to two, and the number of the dispersion devices 11 a and 11b is set to two. However, the number of the fiber-forming mechanisms may be set to three or more, and the number of the dispersion devices may be set to three or more. In this case, the number of the fiber-forming mechanisms is set to be the same as that of the dispersion devices. Further, in this case, the fiber-forming mechanisms are arranged apart from each other in the conveyance direction of the conveyor 13, and the dispersion devices are arranged at the same positions as those of the fiber-forming mechanisms in the conveyance direction of the conveyor 13.

### Third Embodiment

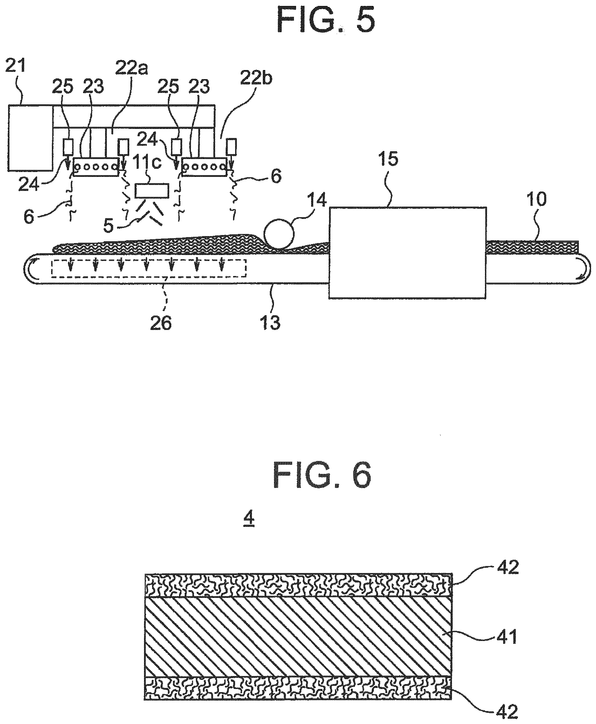

FIG. 5 is a configuration view for illustrating a manufacturing apparatus for a vacuum heat insulating material according to a third embodiment of the present invention. In the third embodiment, the plurality of fiber-forming mechanisms 22a and 22b are arranged apart from each other in the conveyance direction of the conveyor 13. Further, in the third embodiment, an intermediate dispersion device 11c is arranged at a position different from those of the fiber-forming mechanisms 22a and 22b in the conveyance direction of the conveyor 13.

In this example, the first fiber-forming mechanism 22a and the second fiber-forming mechanism 22b are arranged apart from each other in the conveyance direction of the conveyor 13. Further, in this example, the intermediate dispersion device 11c is arranged at a position between the first fiber-forming mechanism 22a and the second fiber-forming mechanism 22b in the conveyance direction of the conveyor 13.

The second fiber-forming mechanism 22b is arranged on the downstream side in the conveyance direction of the conveyor 13 with respect to the first fiber-forming mechanism 22a, that is, on the roller 14 side. Each configuration of the first fiber-forming mechanism 22a and the second fiber-forming mechanism 22b is the same as that of the fiber-forming mechanism 22 in the first embodiment. The melted second glass material is supplied to each of the first fiber-forming mechanism 22a and the second fiber-forming mechanism 22b from the common second melting furnace 21.

The configuration of the intermediate dispersion device 11c is the same as that of the dispersion device 11 in the first embodiment. When viewed from above, the intermediate dispersion device 11c is arranged at a position outside of respective ranges of the first fiber-forming mechanism 22a and the second fiber-forming mechanism 22b. With this, the plurality of first fibers 5 dispersed in the intermediate dispersion device 11c are dropped onto the conveyor 13 without being mixed with the second fibers 6 in air above the conveyor 13. The other configurations of the manufacturing apparatus for a vacuum heat insulating material are the same as those of the first embodiment.

Next, a method of manufacturing the core material 2 of the vacuum heat insulating material 1 is described. First, the plurality of first fibers 5 are manufactured in advance in the same manner as in the first-fiber manufacturing step in the first embodiment. The plurality of first fibers 5 are supplied to the intermediate dispersion device 11c (first-fiber manufacturing step).

When the fiber body 4 is manufactured, the plurality of second fibers 6 are manufactured in each of the first fiber-forming mechanism 22a and the second fiber-forming mechanism 22b in the same manner as in the second-fiber manufacturing step in the first embodiment (second-fiber manufacturing step).

The plurality of second fibers 6 manufactured in each of the first fiber-forming mechanism 22a and the second fiber-forming mechanism 22b are supplied onto the conveyor 13 at positions respectively corresponding to the first fiber-forming mechanism 22a and the second fiber-forming mechanism 22b while being dispersed in air from the centrifugal spinner 23 of the first fiber-forming mechanism 22a.

Meanwhile, the plurality of first fibers 5 manufactured in advance are dropped while being dispersed in air from the intermediate dispersion device 11c and supplied onto the conveyor 13 at positions respectively corresponding to the intermediate dispersion device 11 c. Thus, in the conveyance direction of the conveyor 13, after the plurality of second fibers 6 are supplied onto the conveyor 13 at the position of the first fiber-forming mechanism 22a, the plurality of first fibers 5 are supplied onto the conveyor 13 at the position of the intermediate dispersion device 11 c, and then the plurality of second fibers 6 are further supplied onto the conveyor 13 at the position of the second fiber-forming mechanism 22b.

With this, on the conveyor 13, a fiber layer of the first fibers 5 supplied from the intermediate dispersion device 11c is stacked on a fiber layer of the second fibers 6 supplied from the first fiber-forming mechanism 22a, and a fiber layer of the second fibers 6 supplied from the second fiber-forming mechanism 22b is stacked on a fiber layer of the first fibers 5 (fiber supply step). The manufacturing procedure after this is the same as that in the first embodiment.

FIG. 6 is a vertical sectional view for illustrating the fiber body 4 manufactured by the manufacturing apparatus for a vacuum heat insulating material of FIG. 5. The fiber body 4 includes a fiber layer 41 of the first fibers 5 and a pair of fiber layers 42 of the second fibers 6. In the fiber body 4, the fiber layer 41 and the pair of fiber layers 42 are laminated. The fiber layer 41 is sandwiched between the pair of fiber layers 41 in the lamination direction of the fiber layers 41 and 42. With this, the fiber layers 42 of the second fibers 6 in the core material 2 are brought into contact with an inner surface of the outer covering material 3. Specifically, in the core material 2, portions that are brought into contact with the outer covering material 3 correspond to the fiber layers 42 of the second fibers 6.

In the above-mentioned method of manufacturing a vacuum heat insulating material, the intermediate dispersion device 11c is arranged between the plurality of fiber-forming mechanisms 22a and 22b in the conveyance direction of the conveyor 13, and hence the fiber body 4 having a configuration in which the fiber layer 41 of the first fibers 5 is sandwiched between the pair of fiber layers 42 of the second fibers 6 can be manufactured. With this, high heat resistance can be ensured in the fiber layer 41 of the first fibers 5 while the shape of the fiber body 4 is ensured by the fiber layers 42 of the second fibers 6. Thus, the heat insulating performance of the vacuum heat insulating material 1 can be improved.

From the viewpoint of the heat insulating performance of the vacuum heat insulating material 1, it is preferred that the thickness of the fiber layer 42 of the second fibers 6 be smaller because the heat resistance of the fiber layer 41 of the first fibers 5 is large. Thus, it is preferred that the thickness of the fiber layer 41 of the first fibers 5 be set to 50 % or more of the thickness of the entire fiber body 4.

Further, in the above-mentioned example, the fiber body 4 has a configuration in which the fiber layer 42 of the second fibers 6, the fiber layer 41 of the first fibers 5, and the fiber layer 42 of the second fibers 6 are successively stacked on one another. However, the fiber body 4 may have a configuration in which the fiber layer 41 of the first fibers 5, the fiber layer 42 of the second fibers 6, and the fiber layer 41 of the first fibers 5 are successively stacked on one another. In this case, the first dispersion device configured to manufacture the first fibers 5, the fiber-forming mechanism configured to manufacture the second fibers 6, and the second dispersion device configured to manufacture the first fibers 5 are arranged in the order of the first dispersion device, the fiber-forming mechanism, and the second dispersion device in the conveyance direction of the conveyor 13.

With this, in the conveyance direction of the conveyor 13, after the plurality of first fibers 5 are supplied onto the conveyor 13 at the position of the first dispersion device, the plurality of second fibers 6 are supplied onto the conveyor 13 at the position of the fiber-forming mechanism, and the plurality of first fibers 5 are further supplied onto the conveyor 13 at the position of the second dispersion device.

Further, in the above-mentioned example, the fiber body 4 has a configuration in which the fiber layer 41 of the first fibers 5 is sandwiched between the pair of fiber layers 42 of the second fibers 6. However, the present invention is not limited thereto, and the fiber body 4 may have a configuration of a fiber layer laminate of four or more layers in which the fiber layer 41 of the first fibers 5 and the fiber layer 42 of the second fibers 6 are alternately laminated.

### Fourth Embodiment

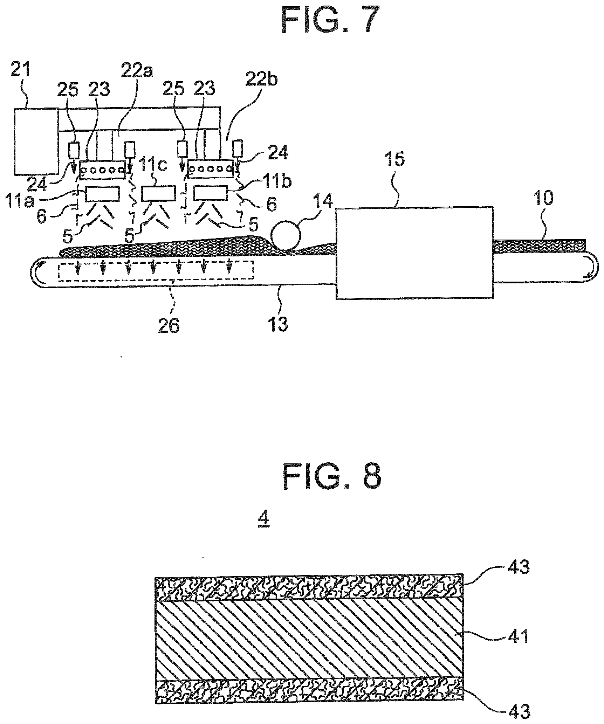

FIG. 7 is a configuration view for illustrating a manufacturing apparatus for a vacuum heat insulating material according to a fourth embodiment of the present invention. In the fourth embodiment, the plurality of fiber-forming mechanisms 22a and 22b are arranged apart from each other in the conveyance direction of the conveyor 13. Further, in the fourth embodiment, the plurality of dispersion devices 11a, 11b, and 11c are arranged at respective positions of the fiber-forming mechanisms 22a and 22b and at a position different from those of the fiber-forming mechanisms 22a and 22b in the conveyance direction of the conveyor 13.

In this example, the first fiber-forming mechanism 22a and the second fiber-forming mechanism 22b are arranged apart from each other in the conveyance direction of the conveyor 13. Further, in this example, the first dispersion device 11a is arranged at the same position as that of the first fiber-forming mechanism 22a in the conveyance direction of the conveyor 13. The second dispersion device 11b is arranged at the same position as that of the second fiber-forming mechanism 22b in the conveyance direction of the conveyor 13. The intermediate dispersion device 11c is arranged at the position between the first fiber-forming mechanism 22a and the second fiber-forming mechanism 22b in the conveyance direction of the conveyor 13.

The configuration of the intermediate dispersion device 11c is the same as that of the dispersion device 11 in the first embodiment. When viewed from above, the intermediate dispersion device 11c is arranged at a position outside of respective ranges of the first fiber-forming mechanism 22a and the second fiber-forming mechanism 22b. With this, the plurality of first fibers 5 dispersed in the intermediate dispersion device 11c are dropped onto the conveyor 13 without being mixed with the second fibers 6 in air above the conveyor 13. The other configurations of the manufacturing apparatus for a vacuum heat insulating material are the same as those of the first embodiment.

Next, a method of manufacturing the core material 2 of the vacuum heat insulating material 1 is described. First, the plurality of first fibers 5 are manufactured in advance in the same manner as in the first-fiber manufacturing step in the first embodiment. The plurality of first fibers 5 are supplied to each of the first dispersion device 11a, the second dispersion device 11b, and the intermediate dispersion device 11c (first-fiber manufacturing step).

When the fiber body 4 is manufactured, the plurality of second fibers 6 are manufactured in each of the first fiber-forming mechanism 22a and the second fiber-forming mechanism 22b in the same manner as in the second-fiber manufacturing step in the first embodiment (second-fiber manufacturing step).

The plurality of second fibers 6 manufactured in each of the first fiber-forming mechanism 22a and the second fiber-forming mechanism 22b are supplied onto the conveyor 13 at positions respectively corresponding to the first fiber-forming mechanism 22a and the second fiber-forming mechanism 22b while being dispersed in air from the centrifugal spinner 23 of the first fiber-forming mechanism 22a. Meanwhile, the plurality of first fibers 5 are dropped while being dispersed in air from each of the first dispersion device 11a, the second dispersion device 11b, and the intermediate dispersion device 11c and supplied onto the conveyor 13 at positions respectively corresponding to the first dispersion device 11a, the second dispersion device 11b, and the intermediate dispersion device 11c.

Thus, the first fibers 5 from each of the first dispersion device 11a and the second dispersion device 11b are tangled with the second fibers 6 to be mixed therewith, and the first fibers 5 from the intermediate dispersion device 11c are directly supplied onto the conveyor 13. Specifically, in the conveyance direction of the conveyor 13, after the plurality of first fibers 5 and the plurality of second fibers 6 are mixed with each other and supplied onto the conveyor 13 at the position of the first fiber-forming mechanism 22a, only the plurality of first fibers 5 are supplied onto the conveyor 13 at the position of the intermediate dispersion device 11c, and then the plurality of first fibers 5 and the plurality of second fibers 6 are mixed with each other and further supplied onto the conveyor 13 at the position of the second fiber-forming mechanism 22b.

With this, on the conveyor 13, the fiber layer of the first fibers 5 supplied from the intermediate dispersion device 11c is stacked on the mixed layer of the first fibers 5 and the second fibers 6 supplied from the first fiber-forming mechanism 22a and the first dispersion device 11a, and the mixed layer of the first fibers 5 and the second fibers 6 supplied from the second fiber-forming mechanism 22b and the second dispersion device 11b is stacked on the fiber layer of the first fibers 5 (fiber supply step). The manufacturing procedure after this is the same as that in the first embodiment.

FIG. 8 is a vertical sectional view for illustrating the fiber body 4 manufactured by the manufacturing apparatus for a vacuum heat insulating material of FIG. 7. The fiber body 4 includes the fiber layer 41 of the first fibers 5 and a pair of mixed layers 43 of the first fibers 5 and the second fibers 6. In the fiber body 4, the fiber layer 41 and the pair of mixed layers 43 are laminated.

The fiber layer 41 is sandwiched between the pair of mixed layers 43 in the lamination direction of the fiber layer 41 and the mixed layers 43. With this, the mixed layers 43 in the core material 2 are brought into contact with the inner surface of the outer covering material 3. Specifically, in the core material 2, portions that are brought into contact with the outer covering material 3 correspond to the mixed layers 43.

In the above-mentioned method of manufacturing a vacuum heat insulating material, in the conveyance direction of the conveyor 13, the first dispersion device 11 a is arranged at the same position as that of the first fiber-forming mechanism 22a, the second dispersion device 11b is arranged at the same position as that of the second fiber-forming mechanism 22b, and the intermediate dispersion device 11c is arranged between the plurality of fiber-forming mechanisms 22a and 22b. Therefore, the fiber body 4 having a configuration in which the fiber layer 41 of the first fibers 5 is sandwiched between the pair of mixed layers 43 of the first fibers 5 and the second fibers 6 can be manufactured.

With this, high heat resistance can be ensured in the fiber layer 41 of the first fibers 5 while the shape of the fiber body 4 is ensured by the mixed layers 43. Further, also in the mixed layer 43, the second fibers 6 are pressed with the first fibers 5, and respective directions of the first fibers 5 and the second fibers 6 can be easily brought close to the direction orthogonal to the thickness direction of the fiber body 4 so that heat resistance can be improved. Thus, the heat insulating performance of the vacuum heat insulating material 1 can be further improved.

In the above-mentioned example, the fiber body 4 has a configuration in which the fiber layer 41 of the first fibers 5 is sandwiched between the pair of mixed layers 43 of the first fibers 5 and the second fibers 6. However, the present invention is not limited thereto, and the fiber body 4 may have a configuration of a laminate of four or more layers in which the fiber layer 41 and the mixed layer 43 are alternately laminated.

Further, in the above-mentioned example, the fiber layer 41 of the first fibers 5 is formed of only the first fibers 5, but the second fibers 6 may be included in the fiber layer 41 of the first fibers 5. In this case, the content ratio of the first fibers 5 included in the fiber layer 41 of the first fibers 5 is set to be larger than the content ratio of the first fibers 5 included in the mixed layer 43.

### Fifth Embodiment

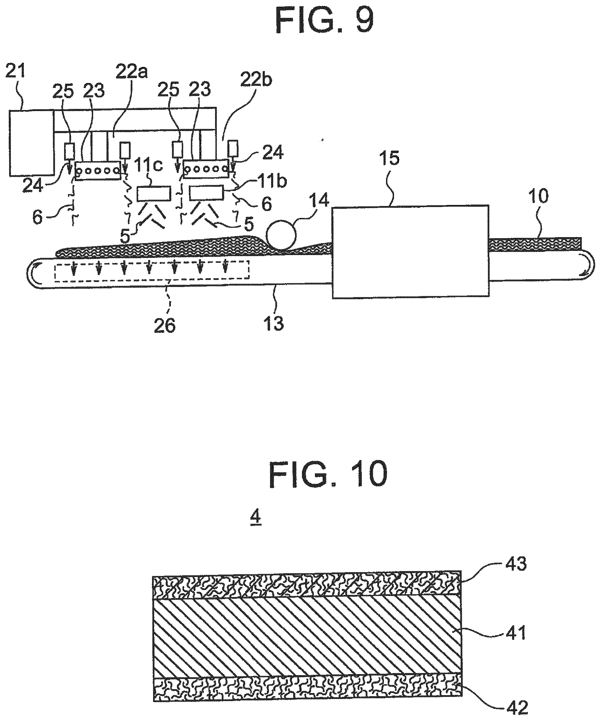

FIG. 9 is a configuration view for illustrating a manufacturing apparatus for a vacuum heat insulating material according to a fifth embodiment of the present invention. In the fifth embodiment, in the configuration of the manufacturing apparatus for a vacuum heat insulating material according to the fourth embodiment, the first dispersion device 11a is removed.

Specifically, in the fifth embodiment, the first fiber-forming mechanism 22a and the second fiber-forming mechanism 22b are arranged apart from each other in the conveyance direction of the conveyor 13, the intermediate dispersion device 11c is arranged at a position between the first fiber-forming mechanism 22a and the second fiber-forming mechanism 22b in the conveyance direction of the conveyor 13, and the second dispersion device 11b is arranged at the same position as that of the second fiber-forming mechanism 22b in the conveyance direction of the conveyor 13. The other configurations of the manufacturing apparatus for a vacuum heat insulating material are the same as those of the fourth embodiment.

Next, a method of manufacturing the core material 2 of the vacuum heat insulating material 1 is described. First, the plurality of first fibers 5 are manufactured in advance in the same manner as in the first-fiber manufacturing step in the first embodiment. The plurality of first fibers 5 are supplied to each of the second dispersion device 11b and the intermediate dispersion device 11c (first-fiber manufacturing step).

When the fiber body 4 is manufactured, the plurality of second fibers 6 are manufactured in each of the first fiber-forming mechanism 22a and the second fiber-forming mechanism 22b in the same manner as in the second-fiber manufacturing step in the first embodiment (second-fiber manufacturing step).

The plurality of second fibers 6 manufactured in each of the first fiber-forming mechanism 22a and the second fiber-forming mechanism 22b are supplied onto the conveyor 13 at positions respectively corresponding to the first fiber-forming mechanism 22a and the second fiber-forming mechanism 22b while being dispersed in air from the centrifugal spinner 23 of the first fiber-forming mechanism 22a. Meanwhile, the plurality of first fibers 5 are dropped while being dispersed in air from each of the second dispersion device 11b and the intermediate dispersion device 11c and supplied onto the conveyor 13 at positions respectively corresponding to the second dispersion device 11b and the intermediate dispersion device 11c.

Thus, the first fibers 5 from the second dispersion device 11b are tangled with the second fibers 6 to be mixed therewith, and the second fibers 6 from the first fiber-forming mechanism 22a and the first fibers 5 from the intermediate dispersion device 11c are directly supplied onto the conveyor 13. Specifically, in the conveyance direction of the conveyor 13, after only the plurality of second fibers 6 are supplied onto the conveyor 13 at the position of the first fiber-forming mechanism 22a, only the plurality of first fibers 5 are supplied onto the conveyor 13 at the position of the intermediate dispersion device 11c, and then the plurality of first fibers 5 and the plurality of second fibers 6 are mixed with each other and supplied onto the conveyor 13 at the position of the second fiber-forming mechanism 22b.

With this, on the conveyor 13, the fiber layer of the first fibers 5 supplied from the intermediate dispersion device 11c is stacked on the fiber layer of the second fibers 6 supplied from the first fiber-forming mechanism 22a, and the mixed layer of the first fibers 5 and the second fibers 6 supplied from the second fiber-forming mechanism 22b and the second dispersion device 11b is stacked on the fiber layer of the first fibers 5 (fiber supply step). The manufacturing procedure after this is the same as that in the first embodiment.

FIG. 10 is a vertical sectional view for illustrating the fiber body 4 manufactured by the manufacturing apparatus for a vacuum heat insulating material of FIG. 9. The fiber body 4 includes the fiber layer 41 of the first fibers 5, the fiber layer 42 of the second fibers 6, and the mixed layer 43 of the first fibers 5 and the second fibers 6. In the fiber body 4, the fiber layer 42 of the second fibers 6, the fiber layer 41 of the first fibers 5, and the mixed layer 43 of the first fibers 5 and the second fibers 6 are successively laminated from a lower side.

In the above-mentioned method of manufacturing a vacuum heat insulating material, in the conveyance direction of the conveyor 13, the second dispersion device 11b is arranged at the same position as that of the second fiber-forming mechanism 22b, and the intermediate dispersion device 11c is arranged between the first fiber-forming mechanism 22a and the second fiber-forming mechanism 22b. Therefore, the fiber body 4 in which the fiber layer 42 of the second fibers 6, the fiber layer 41 of the first fibers 5, and the mixed layer 43 of the first fibers 5 and the second fibers 6 are successively laminated from a lower side can be manufactured. With this, high heat resistance can be ensured in the fiber layer 41 of the first fibers 5 while the shape of the fiber body 4 is ensured by the fiber layer 42 and the mixed layer 43. Further, also in the mixed layer 43, the second fibers 6 are pressed with the first fibers 5, and respective directions of the first fibers 5 and the second fibers 6 can be easily brought close to the direction orthogonal to the thickness direction of the fiber body 4 so that heat resistance can be improved. Thus, the heat insulating performance of the vacuum heat insulating material 1 can be further improved.

In the above-mentioned example, the fiber body 4 has a configuration of three layers in which the fiber layer 42 of the second fibers 6, the fiber layer 41 of the first fibers 5, and the mixed layer 43 of the first fibers 5 and the second fibers 6 are successively laminated. However, the present invention is not limited thereto, and the fiber body 4 may have a configuration of a laminate of four or more layers in which the fiber layer 42, the fiber layer 41, and the mixed layer 43 are successively laminated.

Further, in the third and fifth embodiments, the fiber layer 41 of the first fibers 5 is formed of only the first fibers 5, but the second fibers 6 may be included in the fiber layer 41 of the first fibers 5. In this case, the content ratio of the first fibers 5 included in the fiber layer 41 of the first fibers 5 is set to be larger than the content ratio of the first fibers 5 included in the fiber layer 42 of the second fibers 6. Further, in the third and fifth embodiments, the fiber layer 42 of the second fibers 6 is formed of only the second fibers 5, but the first fibers 5 may be included in the fiber layer 42 of the second fibers 6. In this case, the content ratio of the second fibers 6 included in the fiber layer 42 of the second fibers 6 is set to be larger than the content ratio of the second fibers 6 included in the fiber layer 41 of the first fibers 5.

### Sixth Embodiment

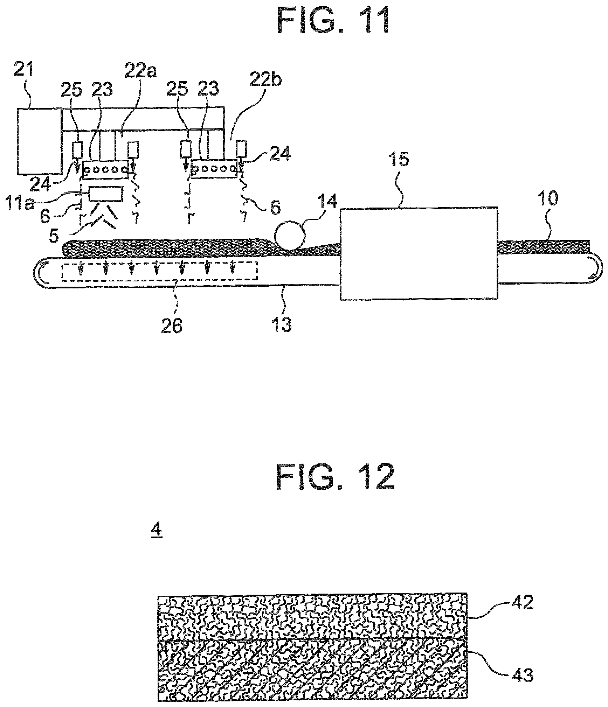

FIG. 11 is a configuration view for illustrating a manufacturing apparatus for a vacuum heat insulating material according to a sixth embodiment of the present invention. In the sixth embodiment, in the configuration of the manufacturing apparatus for a vacuum heat insulating material according to the second embodiment, the second dispersion device 11b is removed. Specifically, in the sixth embodiment, the first fiber-forming mechanism 22a and the second fiber-forming mechanism 22b are arranged apart from each other in the conveyance direction of the conveyor 13, and the first dispersion device 11a is arranged at the same position as that of the first fiber-forming mechanism 22a in the conveyance direction of the conveyor 13.

A dispersion device is not arranged at a position between the first fiber-forming mechanism 22a and the second fiber-forming mechanism 22b in the conveyance direction of the conveyor 13 and at a position of the second fiber-forming mechanism 22b in the conveyance direction of the conveyor 13. The other configurations of the manufacturing apparatus for a vacuum heat insulating material are the same as those of the second embodiment.

Next, a method of manufacturing the core material 2 of the vacuum heat insulating material 1 is described. First, the plurality of first fibers 5 are manufactured in advance in the same manner as in the first-fiber manufacturing step in the first embodiment. The plurality of first fibers 5 are supplied to the first dispersion device 11 a (first-fiber manufacturing step).

When the fiber body 4 is manufactured, the plurality of second fibers 6 are manufactured in each of the first fiber-forming mechanism 22a and the second fiber-forming mechanism 22b in the same manner as in the second-fiber manufacturing step in the first embodiment (second-fiber manufacturing step).

The plurality of second fibers 6 manufactured in each of the first fiber-forming mechanism 22a and the second fiber-forming mechanism 22b are supplied onto the conveyor 13 at positions respectively corresponding to the first fiber-forming mechanism 22a and the second fiber-forming mechanism 22b while being dispersed in air from the centrifugal spinner 23 of the first fiber-forming mechanism 22a. Meanwhile, the plurality of first fibers 5 manufactured in advance are dropped while being dispersed in air from the first dispersion device 11a and supplied onto the conveyor 13 at a position corresponding to the first dispersion device 11a.

With this, the plurality of first fibers 5 and the plurality of second fibers 6 are supplied onto the conveyor 13 in a state of being tangled to be mixed with each other at the position corresponding to the first fiber-forming mechanism 22a, and only the plurality of second fibers 6 are supplied onto the conveyor 13 at the position corresponding to the second fiber-forming mechanism 22b.

Specifically, in the conveyance direction of the conveyor 13, after the plurality of first fibers 5 and the plurality of second fibers 6 are supplied onto the conveyor 13 at the position of the first fiber-forming mechanism 22a, the plurality of second fibers 6 are further supplied onto the conveyor 13 at the position of the second fiber-forming mechanism 22b. With this, on the conveyor 13, the plurality of second fibers 6 supplied from the second fiber-forming mechanism 22b are stacked on the plurality of first fibers 5 and the plurality of second fibers 6 supplied from the first fiber-forming mechanism 22a and the first dispersion device 11a (fiber supply step). The manufacturing procedure after this is the same as that of the first embodiment.

FIG. 12 is a vertical sectional view for illustrating the fiber body 4 manufactured by the manufacturing apparatus for a vacuum heat insulating material of FIG. 11. The fiber body 4 includes the fiber layer 42 of the second fibers 6 and the mixed layer 43 of the first fibers 5 and the second fibers 6. In the fiber body 4, the mixed layer 43 of the first fibers 5 and the second fibers 6 and the fiber layer 42 of the second fibers 6 are successively laminated from a lower side.

In the above-mentioned method of manufacturing a vacuum heat insulating material, the first dispersion device 11a is arranged at the same position as that of the first fiber-forming mechanism 22a in the conveyance direction of the conveyor 13, and the second fiber-forming mechanism 22b is arranged apart from the first fiber-forming mechanism 22a in the conveyance direction of the conveyor 13. Therefore, the fiber body 4 in which the mixed layer 43 of the first fibers 5 and the second fibers 6 and the fiber layer 42 of the second fibers 6 are successively laminated from a lower side can be manufactured.

With this, the second fibers 6 are pressed with the first fibers 5 in the mixed layer 43 while the shape of the fiber body 4 is ensured by the fiber layer 42 and the mixed layer 43, and respective directions of the first fibers 5 and the second fibers 6 can be easily brought close to the direction orthogonal to the thickness direction of the fiber body 4. Thus, the heat resistance of the vacuum heat insulating material 1 can be improved, and the heat insulating performance of the vacuum heat insulating material 1 can be improved.

In the above-mentioned example, the fiber body 4 has a configuration of two layers in which the mixed layer 43 of the first fibers 5 and the second fibers 6 and the fiber layer 42 of the second fibers 6 are successively laminated. However, the present invention is not limited thereto, and the fiber body 4 may have a configuration of a laminate of three or more layers in which the mixed layer 43 and the fiber layer 42 are successively laminated.

Further, in each of the above-mentioned embodiments, the plurality of first fibers 5 have an average fiber diameter larger than an average fiber diameter of the plurality of second fibers 6. However, the average fiber diameter of the plurality of first fibers 5 may be the same as that of the plurality of second fibers 6. Alternatively, the average fiber diameter of the plurality of first fibers 5 may be smaller than the average fiber diameter of the plurality of second fibers 6.

Further, in each of the above-mentioned embodiments, the plurality of first fibers 5 have an average fiber length larger than an average fiber length of the plurality of second fibers 6. However, the average fiber length of the plurality of first fibers 5 may be the same as that of the plurality of second fibers 6. Alternatively, the average fiber length of the plurality of first fibers 5 may be smaller than the average fiber length of the plurality of second fibers 6.

Moreover, in each of the above-mentioned embodiments, the plurality of first fibers 5 have a Young's modulus larger than a Young's modulus of the plurality of second fibers 6. However, the Young's modulus of the plurality of first fibers 5 may be the same as that of the plurality of second fibers 6. Alternatively, the Young's modulus of the plurality of first fibers 5 may be smaller than the Young's modulus of the plurality of second fibers 6.

Further, in each of the above-mentioned embodiments, the plurality of second fibers 6 having crimpability are manufactured by the centrifugation method, but the plurality of second fibers 6 may be manufactured by a flame method.

Further, in each of the above-mentioned embodiments, the fiber body has a Amended Sheet
configuration in which the plurality of layers selected from the mixed layer including the first fibers 5 and the second fibers 6 mixed with each other, the fiber layer of the first fibers 5, and the fiber layer of the second fibers 6 are laminated. However, the present invention is not limited thereto, and, for example, the fiber body may have a configuration in which a plurality of kinds of mixed layers including the first fibers 5 and the second fibers 6 mixed with each other with different mixing ratios are laminated.

Specifically, the fiber body may have a configuration in which a first mixed layer including the first fibers 5 and the second fibers 6 mixed with each other at a first ratio and a second mixed layer including the first fibers 5 and the second fibers 6 mixed with each other at a second ratio different from the first ratio are laminated. In this case, for example, the fiber body can be manufactured by the manufacturing apparatus illustrated in FIG. 4.

Further, the fiber body may have a configuration in which a plurality of kinds of mixed layers including the first fibers 5 and the second fibers 6 mixed with each other at different mixing ratios and at least any one of the fiber layer of the first fibers 5 or the fiber layer of the second fibers 6 are laminated.

Although the details of the present invention are specifically described above with reference to the preferred embodiments, it is apparent that persons skilled in the art may adopt various modifications without departing from the scope of the appended claims.

### List of Reference Signs

- 1: vacuum heat insulating material
- 2: core material
- 3: outer covering material
- 4: fiber body
- 5: first fiber
- 6: second fiber
- 10: continuous fiber body
- 11, 11a, 11b, 11c: dispersion device
- 12: second-fiber manufacturing device
- 13: conveyor
- 14: roller (compression device)
- 22, 22a, 22b: fiber-forming mechanism
- 42: fiber layer
- 43: mixed layer

## Claims

1. A method of manufacturing a vacuum heat insulating material including a plurality of first fibers (5) having linearity and a plurality of second fibers (6) having crimpability, comprising:
- a fiber supply step of supplying the plurality of first fibers (5), which are formed of a first glass material, and the plurality of second fibers (6), which are formed of a second glass material onto a conveyor (13); and
- a compression step of compressing, after the fiber supply step, the plurality of first fibers (5) and the plurality of second fibers (6) on the conveyor (13) to obtain a continuous fiber body (10) including the plurality of first fibers (5) and the plurality of second fibers (6), wherein the Young's modulus of the plurality of first fibers (5) is higher than the Young's modulus of the plurality of second fibers (6) by changing compositions of the first glass material and the second glass material.

2. The method of manufacturing a vacuum heat insulating material according to claim 1,
further comprising:
- a core material manufacturing step of manufacturing a core material (2) through use of the continuous fiber body (10); and
- manufacturing step of manufacturing a vacuum heat insulating material (1) through use of the core material (2).

3. The method of manufacturing a vacuum heat insulating material according to claim 1 or 2,
further comprising:
- a first-fiber manufacturing step of manufacturing the plurality of first fibers (5); and
- a second-fiber manufacturing step of manufacturing the plurality of second fibers (6),
wherein the fiber supply step includes supplying the plurality of first fibers (5) manufactured in the first-fiber manufacturing step and the plurality of second fibers (6) manufactured in the second-fiber manufacturing step onto the conveyor (13).

4. The method of manufacturing a vacuum heat insulating material according to claim 3,
wherein the first-fiber manufacturing step includes:
- a first melting step of melting a first glass material;
- a continuous fiber manufacturing step of manufacturing a continuous fiber from the first glass material melted in the first melting step by a drawing method; and
- a cutting step of cutting the continuous fiber to manufacture a plurality of chopped fibers so that the plurality of chopped fibers are to be used as the plurality of first fibers (5).

5. The method of manufacturing a vacuum heat insulating material according to claim 3 or 4,
wherein the second-fiber manufacturing step includes:
- a second melting step of melting a second glass material; and
- a centrifugation step of manufacturing glass wool from the second glass material melted in the second melting step by a centrifugation method so that the glass wool is to be used as the plurality of second fibers (6).

6. The method of manufacturing a vacuum heat insulating material according to any one of claims 3 to 5,
wherein the first-fiber manufacturing step includes melting the first glass material and manufacturing the plurality of first fibers (5) from the melted first glass material, and
wherein the second-fiber manufacturing step includes melting the second glass material, which is a glass material different in composition from the first glass material, and manufacturing the plurality of second fibers (6) from the melted second glass material.

7. The method of manufacturing a vacuum heat insulating material according to any one of claims 1 to 6,
wherein the fiber supply step includes mixing the plurality of first fibers (5) and the plurality of second fibers (6) with each other while supplying the plurality of first fibers (5) and the plurality of second fibers (6) onto the conveyor (13).

8. The method of manufacturing a vacuum heat insulating material according to claim 7,
wherein the fiber supply step includes mixing the plurality of first fibers (5) and the plurality of second fibers (6) with each other in a space above the conveyor (13).

9. The method of manufacturing a vacuum heat insulating material according to any one of claims 1 to 6,
wherein the fiber supply step includes
- supplying one of the plurality of first fibers (5) and the plurality of second fibers (6) onto the conveyor (13),
- supplying another of the plurality of first fibers (5) and the plurality of second fibers (6) onto the one of the plurality of first fibers (5) and the plurality of second fibers (6), and
- supplying the one of the plurality of first fibers (5) and the plurality of second fibers (6) onto the other of the plurality of first fibers (5) and the plurality of second fibers (6).

10. The method of manufacturing a vacuum heat insulating material according to any one of claims 1 to 9,
wherein the plurality of first fibers (5) have an average fiber diameter larger than an average fiber diameter of the plurality of second fibers (6).

11. The method of manufacturing a vacuum heat insulating material according to any one of claims 1 to 9,
wherein the plurality of first fibers (5) have an average fiber length larger than an average fiber length of the plurality of second fibers (6).

12. The method of manufacturing a vacuum heat insulating material according to any one of claims 1 to 11,
wherein the fiber supply step includes:
- a first-fiber supply step of supplying the plurality of first fibers (5) from a dispersion device (11) arranged above the conveyor (13) to the conveyor (13);
- a second-fiber supply step of supplying the plurality of second fibers (6) to the conveyor (13) by discharging the plurality of second fibers (6) from a centrifugal spinner (23) and jetting air from a periphery of the centrifugal spinner (23) to the conveyor (13); and
- a mixture supply step of sucking air from below the dispersion device (11) and supplying a mixture of the plurality of first fibers (5) and the plurality of second fibers (6), which are mixed with each other in a space above the conveyor (13), onto the conveyor (13).

13. A manufacturing apparatus for a vacuum heat insulating material, comprising:
- a first-fiber manufacturing device configured to melt a first glass material and manufacture a plurality of first fibers (5) having linearity from the melted first glass material;
- a second-fiber manufacturing device (12) configured to melt a second glass material, which is a glass material different in composition from the first glass material and manufacture a plurality of second fibers (6) having crimpability, which have the Young's modulus lower than the Young's modulus of the plurality of first fibers, from the melted second glass material;
- a conveyor (13) configured to convey the plurality of first fibers (5) and the plurality of second fibers (6); and
- a compression device (14) configured to compress the plurality of first fibers (5) and the plurality of second fibers (6) on the conveyor (13) to obtain a continuous fiber body (10) including the plurality of first fibers (5) and the plurality of second fibers (6).

14. The manufacturing apparatus for a vacuum heat insulating material according to claim 13,
wherein the second-fiber manufacturing device (12) includes a fiber-forming mechanism (22, 22a, 22b) configured to manufacture the plurality of second fibers (6) from the second glass material by a centrifugation method.

15. The manufacturing apparatus for a vacuum heat insulating material according to claim 13 or 14,
further comprising
- a dispersion device (11), which is arranged above the conveyor (13), and is configured to disperse the plurality of first fibers (5) to the conveyor (13),
wherein the second-fiber manufacturing device (12) includes:
a centrifugal spinner (23) configured to discharge the plurality of second fibers (6); and
an air flow generation device (25), which is positioned on a periphery of the centrifugal spinner (23), and is configured to jet air to the conveyor (13), to thereby supply the plurality of second fibers (6) to the conveyor (13),
wherein the conveyor (13) includes a suction portion (26) configured to suck air and supply a mixture of the plurality of first fibers (5) and the plurality of second fibers (6), which are tangled with each other in a space above the conveyor (13), onto the conveyer (13), and the suction portion (26) is arranged below the dispersion device (11)

16. A vacuum heat insulating material, comprising:
- a core material (2); and
- an outer covering material (3) configured to accommodate the core material (2),
wherein the core material (2) includes a plurality of first fibers (5), having linearity which are formed of a first glass material and a plurality of second fibers (6), having crimpability which are formed of a second glass material onto a conveyor (13).

17. The vacuum heat insulating material according to claim 16, wherein a portion of the core material (2), which is brought into contact with the outer covering material (3), comprises a fiber layer (42) formed of the plurality of second fibers (6) or a mixed layer (43) in which the plurality of first fibers (5) and the plurality of second fibers (6) are mixed with each other.

## Patentansprüche

1. Verfahren zum Herstellen eines Vakuum-Wärmeisoliermaterials, das eine Vielzahl von ersten Fasern (5) mit einer Linearität und eine Vielzahl von zweiten Fasern (6) mit einer Kräuselbarkeit enthält, wobei das Verfahren folgende Schritte umfasst:
- einen Faserzuführungsschritt zum Zuführen einer Vielzahl von ersten Fasern (5), die aus einem ersten Glasmaterial gebildet sind, und einer Vielzahl von zweiten Fasern (6), die aus einem zweiten Glasmaterial gebildet sind, zu einem Förderer (13); und
- einen Verdichtungsschritt, bei dem nach dem Faserzuführungsschritt die Vielzahl von ersten Fasern (5) und die Vielzahl von zweiten Fasern (6) auf dem Förderer (13) verdichtet werden, um einen kontinuierlichen Faserkörper (10) zu erhalten, der die Vielzahl von ersten Fasern (5) und die Vielzahl von zweiten Fasern (6) enthält,
wobei der Elastizitätsmodul der Vielzahl von ersten Fasern (5) höher ist als der Elastizitätsmodul der Vielzahl von zweiten Fasern (6), indem die Zusammensetzungen des ersten Glasmaterials und des zweiten Glasmaterials geändert werden.

2. Verfahren zum Herstellen eines Vakuum-Wärmeisoliermaterials nach Anspruch 1,
das ferner folgende Schritte umfasst:
- einen Kernmaterialherstellungsschritt zum Herstellen eines Kernmaterials (2) durch Verwendung des kontinuierlichen Faserkörpers (10); und
- einen Herstellungsschritt zum Herstellen eines Vakuum-Wärmeisolationsmaterials (1) durch Verwendung des Kernmaterials (2).

3. Verfahren zum Herstellen eines Vakuum-Wärmeisoliermaterials nach Anspruch 1 oder 2,
das ferner folgende Schritte umfasst:
- einen ersten Faserherstellungsschritt zum Herstellen der Vielzahl von erste Fasern (5); und
- einen zweiten Faserherstellungsschritt zum Herstellen der Vielzahl von zweiten Fasern (6),
wobei der Faserzuführungsschritt das Zuführen der Vielzahl von ersten Fasern (5), die in dem ersten Faserherstellungsschritt hergestellt worden sind, und der Vielzahl von zweiten Fasern (6), die in dem zweiten Faserherstellungsschritt hergestellt worden sind, auf den Förderer (13) umfasst.

4. Verfahren zum Herstellen eines Vakuum-Wärmeisoliermaterials nach Anspruch 3,
wobei der erste Faserherstellungsschritt Folgendes umfasst:
- einen ersten Schmelzschritt zum Schmelzen eines ersten Glasmaterials;
- einen Schritt zum Herstellen von kontinuierlichen Fasern, bei dem eine kontinuierliche Faser aus dem im ersten Schmelzschritt geschmolzenen ersten Glasmaterial durch ein Ziehverfahren hergestellt wird; und
- einen Schneideschritt zum Schneiden der kontinuierlichen Faser, um eine Vielzahl von geschnittenen Fasern herzustellen, so dass die Vielzahl von geschnittenen Fasern als eine Vielzahl von ersten Fasern (5) verwendbar ist.

5. Verfahren zum Herstellen eines Vakuum-Wärmeisoliermaterials nach Anspruch 3 oder 4,
wobei der zweite Faserherstellungsschritt Folgendes umfasst:
- einen zweiten Schmelzschritt zum Schmelzen eines zweiten Glasmaterials; und
- einen Zentrifugationsschritt zum Herstellen von Glaswolle aus dem zweiten Glasmaterial, das in dem zweiten Schmelzschritt durch ein Zentrifugationsverfahren geschmolzen worden ist, so dass die Glaswolle als eine Vielzahl von zweiten Fasern (6) verwendbar ist.

6. Verfahren zum Herstellen eines Vakuum-Wärmeisoliermaterials nach einem der Ansprüche 3 bis 5,
wobei der erste Faserherstellungsschritt das Schmelzen des ersten Glasmaterials und das Herstellen einer Vielzahl von ersten Fasern (5) aus dem geschmolzenen ersten Glasmaterial umfasst, und
wobei der zweite Faserherstellungsschritt das Schmelzen des zweiten Glasmaterials, das ein Glasmaterial ist, das sich in der Zusammensetzung von dem ersten Glasmaterial unterscheidet, und das Herstellen einer Vielzahl von zweiten Fasern (6) aus dem geschmolzenen zweiten Glasmaterial umfasst.

7. Verfahren zum Herstellen eines Vakuum-Wärmeisoliermaterials nach einem der Ansprüche 1 bis 6,
wobei der Faserzuführungsschritt das Mischen der Vielzahl von ersten Fasern (5) und der Vielzahl von zweiten Fasern (6) umfasst, während die Vielzahl von ersten Fasern (5) und die Vielzahl von zweiten Fasern (6) dem Förderer (13) zugeführt werden.

8. Verfahren zum Herstellen eines Vakuum-Wärmeisoliermaterials nach Anspruch 7,
wobei der Faserzuführungsschritt das Mischen der Vielzahl von ersten Fasern (5) und der Vielzahl von zweiten Fasern (6) miteinander in einem Raum oberhalb des Förderers (13) umfasst.

9. Verfahren zum Herstellen eines Vakuum-Wärmeisoliermaterials nach einem der Ansprüche 1 bis 6,
wobei der Faserzuführungsschritt Folgendes umfasst:
- Zuführen von einer von der Vielzahl von ersten Fasern (5) und der Vielzahl von zweiten Fasern (6) zu dem Förderer (13),
- Zuführen einer weiteren Vielzahl von ersten Fasern (5) und einer Vielzahl von zweiten Fasern (6) auf die eine von der Vielzahl von ersten Fasern (5) und der Vielzahl von zweiten Fasern (6), und
- Zuführen der einen von der Vielzahl der ersten Fasern (5) und der Vielzahl von zweiten Fasern (6) auf die andere von der Vielzahl der ersten Fasern (5) und der Vielzahl der zweiten Fasern (6).

10. Verfahren zum Herstellen eines Vakuum-Wärmeisoliermaterials nach einem der Ansprüche 1 bis 9,
wobei die Vielzahl der ersten Fasern (5) einen durchschnittlichen Faserdurchmesser aufweist, der größer ist als der durchschnittliche Faserdurchmesser der Vielzahl der zweiten Fasern (6).

11. Verfahren zum Herstellen eines Vakuum-Wärmeisoliermaterials nach einem der Ansprüche 1 bis 9,
wobei die Vielzahl der ersten Fasern (5) eine durchschnittliche Faserlänge aufweist, die größer ist als die durchschnittliche Faserlänge der Vielzahl der zweiten Fasern (6).

12. Verfahren zum Herstellen eines Vakuum-Wärmeisoliermaterials nach einem der Ansprüche 1 bis 11,
wobei der Faserzuführungsschritt Folgendes umfasst:
- einen Schritt zur Zuführung der Vielzahl der ersten Fasern (5) von einer oberhalb des Förderers (13) angeordneten Dispersionseinrichtung (11) zu dem Förderer (13);
- einen Schritt zur Zuführung der Vielzahl von zweiten Fasern (6) zu dem Förderer (13) durch Austragen der Vielzahl von zweiten Fasern (6) aus einer Zentrifugalspinnmaschine (23) und Ausstoßen von Luft von der Peripherie der Zentrifugalspinnmaschine (23) zu dem Förderer (13); und
- einen Mischungszuführungsschritt, in dem Luft von einem Ort unterhalb der Dispersionseinrichtung (11) angesaugt wird und eine Mischung aus der Vielzahl der ersten Fasern (5) und der Vielzahl der zweiten Fasern (6), die miteinander in einem Raum oberhalb des Förderers (13) gemischt werden, auf den Förderer (13) zugeführt werden.

13. Vorrichtung zum Herstellen eines Vakuum-Wärmeisoliermaterials, wobei die Vorrichtung Folgendes aufweist:
- eine Einrichtung zum Herstellen erster Fasern, die dazu ausgebildet ist, ein erstes Glasmaterial zu schmelzen und eine Vielzahl von ersten Fasern (5) mit einer Linearität aus dem geschmolzenen ersten Glasmaterial herzustellen;
- eine Einrichtung (12) zum Herstellen zweiter Fasern, die dazu ausgebildet ist, ein zweites Glasmaterial zu schmelzen, das ein Glasmaterial ist, das sich in der Zusammensetzung von dem ersten Glasmaterial unterscheidet, und aus dem geschmolzenen zweiten Glasmaterial eine Vielzahl von zweiten Fasern (6) herzustellen, die eine Kräuselbarkeit aufweisen, und deren Elastizitätsmodul niedriger ist als der Elastizitätsmodul der Vielzahl der ersten Fasern;
- einen Förderer (13), der dazu ausgebildet ist, die Vielzahl der ersten Fasern (5) und die Vielzahl der zweiten Fasern (6) zu befördern; und
- eine Verdichtungseinrichtung (14), die dazu ausgebildet ist, die Vielzahl der ersten Fasern (5) und die Vielzahl der zweiten Fasern (6) auf dem Förderer (13) zu verdichten, um einen kontinuierlichen Faserkörper (10) zu erhalten, der die Vielzahl der ersten Fasern (5) und die Vielzahl der zweiten Fasern (6) enthält.

14. Vorrichtung zum Herstellen eines Vakuum-Wärmeisoliermaterials nach Anspruch 13,
wobei die Einrichtung (12) zum Herstellen der zweiten Fasern einen faserbildenden Mechanismus (22, 22a, 22b) aufweist, der dazu ausgebildet ist, die Vielzahl der zweiten Fasern (6) aus dem zweiten Glasmaterial durch ein Zentrifugationsverfahren herzustellen.

15. Vorrichtung zum Herstellen eines Vakuum-Wärmeisoliermaterials nach Anspruch 13 oder 14,
die ferner Folgendes aufweist:
- eine Dispersionseinrichtung (11), die oberhalb des Förderers (13) angeordnet ist und dazu ausgebildet ist, die Vielzahl der ersten Fasern (5) auf den Förderer (13) zu verteilen,
wobei die zweite Faserherstellungseinrichtung (12) Folgendes aufweist:
- eine Zentrifugalspinnmaschine (23), die dazu ausgebildet ist, die Vielzahl der zweiten Fasern (6) abzugeben; und
eine Einrichtung (25) zur Erzeugung eines Luftstroms, die an der Peripherie der Zentrifugalspinnmaschine (23) angeordnet ist und dazu ausgebildet ist, Luft zu dem Förderer (13) zu blasen, um dadurch die Vielzahl von zweiten Fasern (6) dem Förderer (13) zuzuführen,
wobei der Förderer (13) einen Ansaugbereich (26) aufweist, der dazu ausgebildet ist, Luft anzusaugen und ein Gemisch aus der Vielzahl von ersten Fasern (5) und der Vielzahl von zweiten Fasern (6), die in einem Raum oberhalb des Förderers (13) miteinander verschlungen sind, auf den Förderer (13) zuzuführen, und der Ansaugbereich (26) unterhalb der Dispersionseinrichtung (11) angeordnet ist.

16. Vakuum-Wärmeisolationsmaterial, das Folgendes aufweist:
- ein Kernmaterial (2); und
- ein äußeres Abdeckmaterial (3), das dazu ausgebildet ist, das Kernmaterial (2) aufzunehmen;
wobei das Kernmaterial (2) eine Vielzahl von ersten Fasern (5) mit einer Linearität, die aus einem ersten Glasmaterial gebildet sind, und eine Vielzahl von zweiten Fasern (6) mit einer Kräuselbarkeit, die aus einem zweiten Glasmaterial auf einem Förderer (13) gebildet sind, aufweist.

17. Vakuum-Wärmeisolationsmaterial nach Anspruch 16,
wobei ein Teil des Kernmaterials (2), der mit dem äußeren Abdeckmaterial (3) in Kontakt steht, eine Faserlage (42) aufweist, die aus der Vielzahl von zweiten Fasern (6) oder aus einer gemischten Lage (43) gebildet ist, in der die Vielzahl von ersten Fasern (5) und die Vielzahl von zweiten Fasern (6) miteinander gemischt sind.

## Revendications

1. Procédé de fabrication d'un matériau d'isolation thermique sous vide incluant une pluralité de premières fibres (5) ayant une linéarité et une pluralité de secondes fibres (6) ayant une capacité de sertissage, comprenant :
- une étape d'alimentation de fibres consistant à alimenter la pluralité de premières fibres (5), qui sont formées d'un premier matériau de verre, et la pluralité de secondes fibres (6), qui sont formées d'un second matériau de verre, jusque sur un convoyeur (13) ; et
- une étape de compression consistant à comprimer, après l'étape d'alimentation de fibres, la pluralité de premières fibres (5) et la pluralité de secondes fibres (6) sur le convoyeur (13) pour obtenir un corps de fibre continue (10) incluant pluralité de premières fibres (5) et la pluralité de secondes fibres (6),
dans lequel le module de Young de la pluralité des premières fibres (5) est plus élevé que le module de Young de la pluralité de secondes fibres (6) en changeant des compositions du premier matériau de verre et du second matériau de verre.

2. Procédé de fabrication d'un matériau d'isolation thermique sous vide selon la revendication 1,
comprenant en outre :
- une étape de fabrication d'un matériau de noyau consistant à fabriquer un matériau de noyau (2) en utilisant le corps de fibre continue (10) ; et
- une étape de fabrication consistant à fabriquer un matériau d'isolation thermique sous vide (1) en utilisant le matériau de noyau (2).

3. Procédé de fabrication d'un matériau d'isolation thermique sous vide selon la revendication 1 ou 2,
comprenant en outre :
- une étape de fabrication de premières fibres consistant à fabriquer la pluralité de premières fibres (5) ; et
- une étape de fabrication de secondes fibres consistant à fabriquer la pluralité de secondes fibres (6),
dans lequel l'étape d'alimentation de fibres inclut d'alimenter la pluralité de premières fibres (5), fabriquées dans l'étape de fabrication de premières fibres, et la pluralité de secondes fibres (6), fabriquées dans l'étape de fabrication de secondes fibres, jusque sur le convoyeur (13).

4. Procédé de fabrication d'un matériau d'isolation thermique sous vide selon la revendication 3,
dans lequel l'étape de fabrication de premières fibres inclut :
- une première étape de fusion consistant à faire fondre un premier matériau de verre ;
- une étape de fabrication de fibre continue consistant à fabriquer une fibre continue à partir du premier matériau de verre fondu dans la première étape de fusion via une méthode d'étirage ; et
- une étape de coupe consistant à couper la fibre continue pour fabriquer une pluralité de fibres hachées de sorte que la pluralité de fibres hachées doivent être utilisées à titre de la pluralité de premières fibres (5).

5. Procédé de fabrication d'un matériau d'isolation thermique sous vide selon la revendication 3 ou 4,
dans lequel l'étape de fabrication de secondes fibres inclut :
- une seconde étape de fusion consistant à faire fondre un second matériau de verre ; et
- une étape de centrifugation consistant à fabriquer de la laine de verre à partir du second matériau de verre fondu dans la seconde étape de fusion via une méthode de centrifugation de sorte que la laine de verre doit être utilisée à titre de la pluralité de secondes fibres (6).

6. Procédé de fabrication d'un matériau d'isolation thermique sous vide selon l'une quelconque des revendications 3 à 5,
dans lequel l'étape de fabrication de premières fibres inclut de faire fondre le premier matériau de verre et de fabriquer la pluralité de premières fibres (5) à partir du premier matériau de verre fondu, et
dans lequel l'étape de fabrication de secondes fibres inclut de faire fondre le second matériau de verre, qui est un matériau de verre différent en composition du premier matériau de verre, et de fabriquer la pluralité de secondes fibres (6) à partir du second matériau de verre fondu.

7. Procédé de fabrication d'un matériau d'isolation thermique sous vide selon l'une quelconque des revendications 1 à 6,
dans lequel l'étape d'alimentation de fibres inclut de mélanger la pluralité de premières fibres (5) et la pluralité de secondes fibres (6) les unes avec les autres tout en alimentant la pluralité de premières fibres (5) et la pluralité de secondes fibres (6) jusque sur le convoyeur (13).

8. Procédé de fabrication d'un matériau d'isolation thermique sous vide selon la revendication 7,
dans lequel l'étape d'alimentation de fibres inclut de mélanger la pluralité de premières fibres (5) et la pluralité de secondes fibres (6) les unes avec les autres dans un espace au-dessus du convoyeur (13).

9. Procédé de fabrication d'un matériau d'isolation thermique sous vide selon l'une quelconque des revendications 1 à 6,
dans lequel l'étape d'alimentation de fibres inclut
- d'alimenter une pluralité de fibres parmi la pluralité de premières fibres (5) et la pluralité de secondes fibres (6) jusque sur le convoyeur (13),
- d'alimenter l'autre pluralité de fibres parmi la pluralité de premières fibres (5) et la pluralité de secondes fibres (6) jusque sur ladite une pluralité de fibres parmi la pluralité de premières fibres (5) et la pluralité de secondes fibres (6), et
- d'alimenter ladite une pluralité de fibres parmi la pluralité de premières fibres (5) et la pluralité de secondes fibres (6) jusque sur l'autre pluralité de fibres parmi la pluralité de premières fibres (5) et la pluralité de secondes fibres (6).

10. Procédé de fabrication d'un matériau d'isolation thermique sous vide selon l'une quelconque des revendications 1 à 9,
dans lequel la pluralité de premières fibres (5) ont un diamètre de fibre moyen plus grand qu'un diamètre de fibre moyen de la pluralité de secondes fibres (6).

11. Procédé de fabrication d'un matériau d'isolation thermique sous vide selon l'une quelconque des revendications 1 à 9,
dans lequel la pluralité de premières fibres (5) ont une longueur de fibre moyenne plus grande qu'une longueur de fibre moyenne de la pluralité de secondes fibres (6).

12. Procédé de fabrication d'un matériau d'isolation thermique sous vide selon l'une quelconque des revendications 1 à 11,
dans lequel l'étape d'alimentation de fibres inclut :
- une étape d'alimentation de premières fibres consistant à alimenter la pluralité de premières fibres (5) depuis un dispositif de dispersion (11) agencé au-dessus du convoyeur (13) jusqu'au convoyeur (13) ;
- une étape d'alimentation de secondes fibres consistant à alimenter la pluralité de secondes fibres (6) jusqu'au convoyeur (13) en déchargeant la pluralité de secondes fibres (6) depuis un séparateur centrifuge (23) et en projetant de l'air depuis une périphérie du séparateur centrifuge (23) jusqu'au convoyeur (13) ; et
- une étape d'alimentation de mélange consistant à aspirer de l'air depuis en dessous du dispositif de dispersion (11) et à alimenter un mélange de la pluralité de premières fibres (5) et de la pluralité de secondes fibres (6), qui sont mélangées les unes avec les autres dans un espace au-dessus du convoyeur (13), jusque sur le convoyeur (13).

13. Appareil de fabrication d'un matériau d'isolation thermique sous vide, comprenant :
- un dispositif de fabrication de premières fibres configuré pour faire fondre un premier matériau de verre et pour fabriquer une pluralité de premières fibres (5) ayant une linéarité à partir du premier matériau de verre fondu ;
- un dispositif de fabrication de secondes fibres (12) configuré pour faire fondre un second matériau de verre, qui est un matériau de verre différent composition du premier matériau de verre, et pour fabriquer une pluralité de secondes fibres (6) ayant une capacité de sertissage, dont le module de Young est inférieur au module de Young de la pluralité de premières fibres, à partir du second matériau de verre fondu ;
- un convoyeur (13) configuré pour convoyer la pluralité de premières fibres (5) et la pluralité de secondes fibres (6) ; et
- un dispositif de compression (14) configuré pour comprimer la pluralité de premières fibres (5) et la pluralité de secondes fibres (6) sur le convoyeur (13) pour obtenir un corps de fibre continue (10) incluant la pluralité de premières fibres (5) et la pluralité de secondes fibres (6).

14. Appareil de fabrication d'un matériau d'isolation thermique sous vide selon la revendication 13,
dans lequel le dispositif de fabrication de secondes fibres (12) inclut un mécanisme de formage de fibres (22, 22a, 22b) configuré pour fabriquer la pluralité de secondes fibres (6) à partir du second matériau de verre via une méthode de centrifugation.

15. Appareil de fabrication d'un matériau d'isolation thermique sous vide selon la revendications 13 ou 14,
comprenant en outre
- un appareil de dispersion (11) qui est agencé au-dessus du convoyeur (13) et qui est configuré pour disperser la pluralité de premières fibres (5) jusqu'au convoyeur (13),
dans lequel le dispositif de fabrication de secondes fibres (12) inclut :
un séparateur centrifuge (23) configuré pour décharger la pluralité de secondes fibres (6) ; et
un dispositif de génération de flux d'air (25) qui est positionné sur une périphérie du séparateur centrifuge (23), et qui est configuré pour projeter de l'air jusqu'au convoyeur (13), pour ainsi alimenter la pluralité de secondes fibres (6) jusqu'au convoyeur (13),
dans lequel le convoyeur (13) inclut une portion d'aspiration (26) configurée pour aspirer de l'air et pour alimenter un mélange de la pluralité de premières fibres (5) et de la pluralité de secondes fibres (6), qui sont enchevêtrées les unes avec les autres dans un espace au-dessus du convoyeur (13), jusque sur le convoyeur (13), et la portion d'aspiration (26) est agencée en dessous du dispositif de dispersion (11).

16. Matériau d'isolation thermique sous vide, comprenant :
- un matériau de noyau (2) ; et
- un matériau de couverture extérieur (3) configuré pour loger le matériau de noyau (2),
dans lequel le matériau de noyau (2) inclut une pluralité de premières fibres (5) ayant une linéarité, qui sont formées d'un premier matériau de verre, et une pluralité de secondes fibres (6) ayant une capacité de sertissage, qui sont formées d'un second matériau de verre, jusque sur un convoyeur (13).

17. Matériau d'isolation thermique sous vide selon la revendication 16, dans lequel une portion du matériau de noyau (2), qui est amenée en contact avec le matériau de couverture extérieur (3), comprend une couche de fibre (42) formée de la pluralité de secondes fibres (6) ou une couche mixte (43) dans laquelle la pluralité de premières fibres (5) et la pluralité de secondes fibres (6) sont mélangées les unes avec les autres.
